# EUROPEAN PATENT APPLICATION

(11) **EP 1 178 631 A2**
(43) Date of publication of application: **06.02.2002**
(21) Application number: 01306679.0
(22) Date of filing: 03.08.2001
(51) Int. Cl.: H04L 12/40

(54) **Communication control method, communication system, and communication apparatus**

(30) Priority: 04.08.2000 JP 2000237452; 04.08.2000 JP 2000237454
(71) Applicant: Sony Corporation, Tokyo 141-0001 (JP)
(72) Inventor: Kageyama, Yuichi, c/o Sony Corporation, Tokyo 141-0001 (JP); Sato, Naoyuki, c/o Sony Corporation, Tokyo 141-0001 (JP)
(74) Representative: Pratt, Richard Wilson

(57) **Abstract**

Communication is controlled in a network composed so as to exchange data mutually between a plurality of communication apparatuses to thereby avoid problems that ocuur when requests from a plurality of apparatuses to a specific apparatus are presented simultaneously in a network such as the IEEE1394 system. A first command is sent from a first communication apparatus to a second communication apparatus in the network. By instructing the second communication apparatus to notify to the first communication apparatus that there is a specified state change to be executed by the second communication apparatus, when the specified state change is generated in the second communication apparatus, it is set to notify the state change to the first communication apparatus, and when the state change is notified from the second communication apparatus to the first communication apparatus according to the setting, it is notified to each communication apparatus in the network that the second communication apparatus is ready to accept the first command newly by broadcast communication. Moreover, when instructing the second communication apparatus to notify the first communication apparatus that there is a first state change to be executed by the control of the second communication apparatus, if the second communication apparatus is waiting for notifying a second state change to another communication apparatus, the second communication apparatus reserves to notify the first state change, and after notifying by occurrence of the second state change, the reserved first state change is monitored, and when the first state change is generated, the state change is notified to the first communication apparatus.

## Description

### BACKGROUND OF THE INVENTION

### Field of the Invention:

The present invention relates to a communication control method and a communication system preferably applied in data transmission between apparatuses connected by a bus line of, for example, the IEEE1394 system, and a communication apparatus according to this communication control method.

### Description of the Related Art:

Audio appliances and video appliances (they are called AV appliances hereinafter) connected to a network capable of transmitting information mutually through the network using a serial data bus of the IEEE1394 system are being developed. When transmitting data through the bus, two modes are prepared, that is, an isochronous transfer mode used when transmitting moving image data and audio data of a relatively large capacity in real time, and an asynchronous transfer mode used when transmitting still image, text data, control command and others securely, and exclusive band is used for transmission in each mode, so that transmission in both modes can be performed on one bus.

In this network, by using a specified command (AV/C Command Transaction set: hereinafter called AV/C command), AV appliances can be operated by remote control. The detail of the IEEE1394 system and A/V command is described in AV/C Digital Interface Command Set General Specification disclosed by the 1394 Trade Association.

As transmission of AV/C command between AV appliances connected by the bus line of the IEEE1394 system, not only processing by transmission of a control command for controlling a partner apparatus, but also a status command for knowing a state of a partner apparatus and a notify command for requesting to notify a change in a specified state from the partner apparatus are defined, and processing according to these commands can be also executed. As an example of use of a notify command, if there is no vacancy in the channel on the bus line, a notify command is sent to the apparatus setting this channel, and when a vacancy is made in the channel, it is notified. Specific examples of these commands are explained in the following detailed description of the embodiments.

When using a notify command for requesting to notify a specified state change to a partner apparatus in the network, in the apparatus at this command receiving side, it cannot be predicted when the state change indicated by the command takes place, and it must be stored as a cue in the apparatus to show from which apparatus the request is made. Since this cure storage area is limited, if the area is fully occupied, when a new notify command is received, this command is rejected.

For example, if the number of cues that can be stored in a certain apparatus is 1, and the change of state indicated by the notify command sent to this apparatus does not ocour, this apparatus is kept in a state unable to accept any notify commands from other apparatuses, and notify process using the command prepared in the network cannot be executed normally. In such a case, the cue storage state continues until occurrence of bus reset generated when there is a change in the apparatus structure in the network, and unless bus reset occurs, the state unable to accept a new notify command continues.

In such a state unable to accept a new notify command, in other apparatus attempting to send a notify command to such an apparatus, even though the notify command is sent repeatedly, the command is rejected until a vacancy is made in the cue storage area. Accordingly, in the apparatus at the transmitting side of the notify command, only a response showing rejection of the command is sent back as the response to the transmitted notify command, and it is not known when the notify command is accepted, and transmission of the notify command is executed repeatedly until accepted.

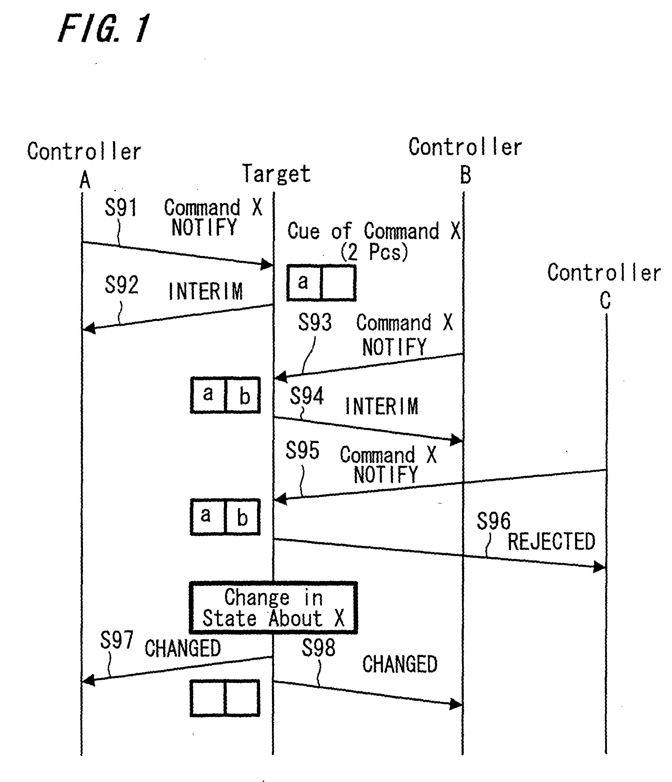

FIG. 1 is a diagram showing an example of use of notify command in the prior art. In this example, there are three controllers (a), (b), (c) in the network, and in a target apparatus for receiving notify commands from each controller, it is designed to store the cues of two notify commands. In this state, for example, the controller (a) transmits a notify command to notify state change about a specified process X to the target apparatus (step S91). When the target apparatus receives this notify command, node ID of the controller (a) is stored in one of the two cue storage areas relating to the process X, and the target apparatus sends back an interim response showing reception of the notify command to the controller (a) (step S92).

Afterward, the controller (b) also transmits a notify command to notify the state change about the specified process X to the target apparatus (step S93). When the target apparatus receives this notify command, node ID of the controller (b) is stored in the remaining one cue storage area relating to the process X, and the target apparatus sends back an interim response showing reception of the notify command to the controller (b) (step S94).

Further, the controller (c) also transmits a notify command to notify state change about the specified process X to the target apparatus (step S95). When the target apparatus receives this notify command, there is no vacancy in the cue storage area relating to the process X, and the target apparatus sends back a reject response to reject the notify command to the controller (c) (step S96).

When the state change about the process X occurs by the control of the target apparatus, a changed response showing occurrence of the state change is sent to the controllers (a) and (b) stored in the cue relating to this process X (steps S97, S98), and the node ID stored in the cue is deleted.

In the controller (c), it is not known when the state change about the process X occurs, and therefore until a vacancy is made in the cue storage area, transmission of notify command at step S95 and return of reject response at step S96 are repeated. Therefore, redundant communication in the network increases, and the communication state in the network is not in favorable state. Right after occurrence of the state change relating to the process X, the controller (c) does not always transmit a notify command, and if a vacancy is made in the cue storage area in the target apparatus, the state of not setting a cue in the target apparatus may continue for long, and the control process in the network may not be done promptly.

Herein, problems of using a notify command in the network connected by the bus line of the IEEE1394 system is explained, however, the same kinds of problems exist also when executing notify processing in the network of other communication configuration.
An embodiment of the invention seeks to avoid problems
when requested to notify from a plurality of apparatuses in the network composed of the bus line of the IEEE1394 system or the like.

### SUMMARY OF THE INVENTION

In the present invention, in the case of controlling communication in a network composed so as to exchange data mutually between a plurality of communication apparatuses, a first command is sent from a first communication apparatus to a second communication apparatus in the network, and by instructing the second communication apparatus to notify to the first communication apparatus that there is a specified state change to be executed in the second communication apparatus, when the specified state change in the second communication apparatus is generated, it is set to notify the state change to the first communication apparatus, and when the state change is notified according to the setting from the second communication apparatus to the first communication apparatus, it is notified to each communication apparatus in the network by broadcast communication that the second communication apparatus is ready to accept the first command newly.

According to the invention, in the second communication apparatus, as being set to notify by the first command, when it is ready to accept a new first command after occurrence of the state unable to be set to notify by a new first command, the fact is noticed to each communication apparatus in the network by broadcast communication. Therefore, each communication apparatus in the network, by issuing the first command after this broadcast communication, can accept the first command efficiently.

Moreover, in the present invention, for controlling communication in a network composed so as to exchange data mutually between a plurality of communication apparatuses, a first command is sent from a first communication apparatus to a second communication apparatus in the network, and when instructing the second communication apparatus to notify to the first communication apparatus that there is a first state change to be executed by control of the second communication apparatus, if the second communication apparatus is waiting for notifying a second state change to another communication apparatus, the second communication apparatus reserves to notify the the first state change, and after giving a notice by generation of the second state change, the reserved first state change is monitored, and when the first state change is generated, the state change is notified to the first communication apparatus.

According to the invention, if the notice by the first command cannot be executed by the second communication apparatus, the specified process is reserved by the first command, and when it is ready to execute the reserved process, it is set so as to notify according to the first command.

### BRIEF DESCRIPTION OF THE DRAWINGS

FIG. 1 is a timing chart of a conventional example of transmission of notify command;
FIG. 2 is an explanatory diagram showing a structural example of a network in an embodiment of the invention;
FIG. 3 is a block diagram showing a structural example (an example of IRD) of an apparatus in the network in the embodiment of the invention;
FIG. 4 is a block diagram showing a structural example (an example of a television receiver) of an apparatus in the network in the embodiment of the invention;
FIG. 5 is a block diagram showing a structural example (an example of a video recording and reproducing apparatus) of an apparatus in the network in the embodiment of the invention;
FIG. 6 is a block diagram showing a structural example (an example of an audio recording and reproducing apparatus) of an apparatus in the network in the embodiment of the invention;
FIG. 7 is a block diagram showing a structural example (an example of an audio reproducing apparatus) of an apparatus in the network in the embodiment of the invention;
FIG. 8 is an explanatory diagram of an example of cycle structure of data transmission in the IEEE1394 system bus;
FIG. 9 is an explanatory diagram of an example of address space structure of CRS architecture;
FIG. 10 is an explanatory diagram of an example of position, name and function of principal CRS;
FIG. 11 is an explanatory diagram of an example of general ROM format;
FIG. 12 is an explanatory diagram of an example of bus info block, root directory, and unit directory;
FIG. 13 is an explanatory diagram of an example of PCR composition;
FIGS. 14A to 14D are explanatory diagrams of an example of oMPR, OPCR, iMPR, and iPCR composition;
FIG. 15 is an explanatory diagram of an example of relation of plug, plug control register, and transmission channel;
FIG. 16 is an explanatory diagram of an example of data composition of descriptor hierarchical structure;
FIG. 17 is an explanatory diagram of an example of descriptor data format;
FIG. 18 is an explanatory diagram of an example of generation ID in PIG. 17;
FIG. 19 is an explanatory diagram of an example of list ID in FIG. 17;
FIG. 20 is an explanatory diagram of an example of a stack model of AV/C command;
FIG. 21 is an explanatory diagram of relation of command and response of FCP;
FIG. 22 is an explanatory diagram further describing the relation of command and response in FIG. 21;
FIG. 23 is an explanatory diagram of an example of data composition of AV/C command;
FIGS. 24A to 24C are explanatory diagrams of a specific example of AV/C command;
FIGS. 25A and 25B are explanatory diagrams of a specific example of command and response of AV/C command;
FIG. 26 is an explanatory diagram of a structural example of GASP packet;
FIG. 27 is a flowchart of processing when receiving notify command in an embodiment of the invention;
FIG. 28 is a timing chart of transmission example in an embodiment of the invention;
FIG. 29 is an explanatory diagram of an example of command and response in another embodiment of the invention;
FIG. 30 is a flowchart of processing when receiving notify command in the other embodiment of the invention;
FIG. 31 is a timing chart of an example of transmission in the other embodiment of the invention;
FIG. 32 is a flowchart of processing when receiving notify command in an embodiment of the invention;
FIG. 33 is an explanatory diagram showing an example of reserve list according to an embodiment of the invention; and
FIG. 34 is a timing chart of an example of transmission in an embodiment of the invention.

### DESCRIPTION OF THE PREFERRED EMBODIMENTS

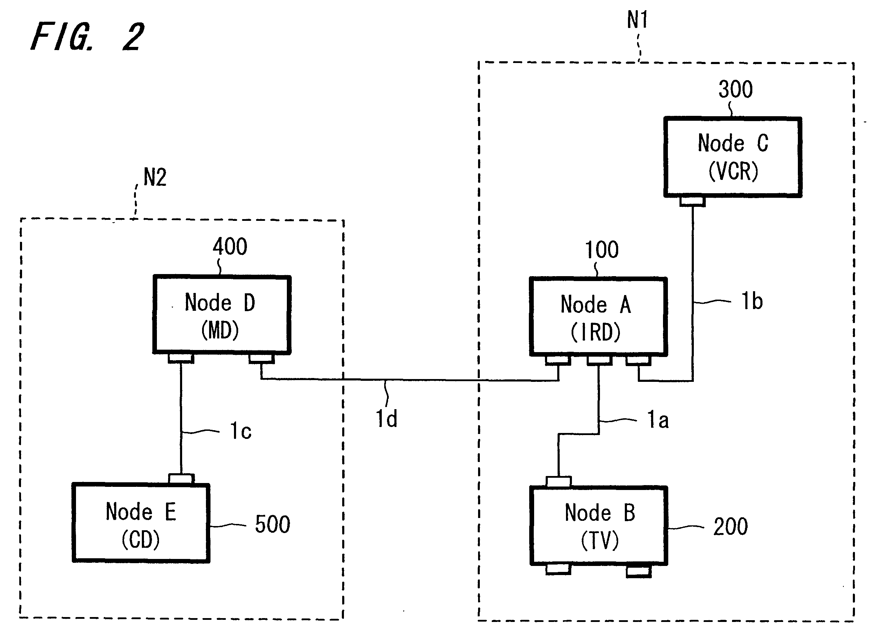

An embodiment of the invention is explained below while referring to FIG. 2 to FIG. 27.

FIG. 2 is a diagram showing a network configuration example in an embodiment of the invention. In this example, using bus lines 1a, 1b, 1c, and 1d standardized by the IEEE1394 system, a plurality of AV appliances are connected to build up the network. That is, the AV appliances in this example are IRD (Integrated Receiver Decoder) 100, television receiver 200, video recording and reproducing apparatus 300, audio recording and reproducing apparatus 400, and audio reproducing apparatus 500, and the bus line ports of the IEEE1394 system of the appliances 100 to 500 are sequentially connected by the bus lines 1a, 1b, 1c, 1d.

In this case, a first network N1 is composed of three appliances, that is, the IRD 100, television receiver 200, and video recording and reproducing apparatus 300, and a second network N2 is composed of the audio recording and reproducing apparatus 400 and audio reproducing apparatus 500. The first network N1 and second network N2 are connected by the bus line 1d. This bus line 1d corresponds to a bus bridge for connecting between the two networks.

The appliances connected to the bus lines 1a to 1d are called units in the AV/C command. Among the units, using the command defined in the AV/C command, information stored in each unit can be mutually read and written. Function blocks stored in the units are called sub-units. Specific examples of units and sub-units are described later.

The unit is also called a node, and as the node ID on the bus, herein, the IRD 100 is node A, the television receiver 200 is node B, the video recording and reproducing apparatus 300 is node C, the audio recording and reproducing apparatus 400 is node D, and the audio reproducing apparatus 500 is node E. The node ID is newly provided when resetting the bus, and may be changed to other node ID. The actual node ID is given in each network, and when plural networks are connected by the bus bridge as shown in FIG. 1, each appliance is identified by using the node ID and network identification ID.

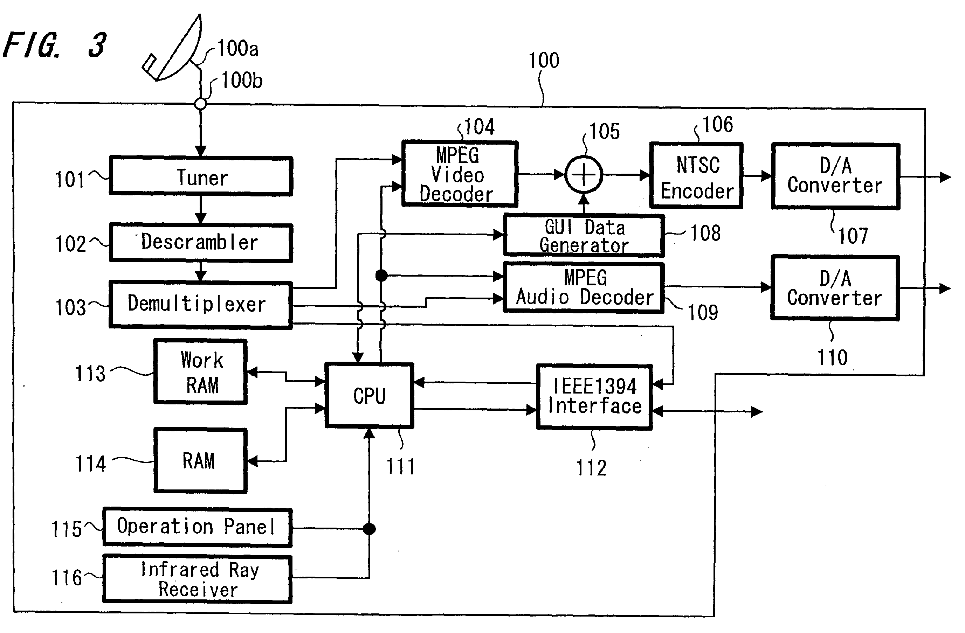

FIG. 3 is a diagram showing a specific structural example of the IRD 100. A broadcast wave from a satellite is received by an antenna 100a and put into a terminal 100b, and supplied into a tuner 101 as program selecting means provided in the IRD 100. The IRD 100 is designed to operate the circuits on the basis of the control of a central processing unit (CPU) 111, and obtains a signal of a specified channel by the tuner 101. The reception signal obtained in the tuner 101 is supplied into a descramble circuit 102.

The descramble circuit 102 takes out only the multiplexed data of a subscribed channel (or non-ciphered channel) out of the reception data, on the basis of the cipher key information of the subscribed channel stored in an IC card (not shown) inserted in the main body of the IRD 100, and supplies the multiplexed data to a demultiplexer 103.

The demultiplexer 103 shuffles the supplied multiplexed data in each channel, and takes out only the channel specified by the user, and sends out a video stream composed of a packet of video portion to an MPEG video decoder 104, and also sends out overlap stream composed of a packet of audio portion to an MPEG audio decoder 109.

The MPEG video decoder 104 restores the video data before compression coding by decoding the video stream, and sends out to an NTSC encoder 106 through an adder 105. The NTSC encoder 106 converts the video data into a luminance signal and color difference signal of the NTSC system, and sends them out to a digital-to-analog converter 107 as NTSC system video data. The digital-to-analog converter 107 converts the NTSC data into an analog video signal, and supplies it to the connected receiver. In FIG. 2, the signal line for transmitting the analog video signal is not shown, but as the receiver, for example, the television receiver 200 can be used.

In this example, the IRD 100 includes a GUI data generator 108 for generating video data for various displays for graphical user interface (GUI) on the basis of the control of the CPU 111. The video data for GUI (display data) generated in this GUI data generator 108 is supplied into the adder 105, and is superposed on the video data output from the MPEG video decoder 104, so that the video for GUI may be superposed on the received broadcast video.

The MPEG audio decoder 109 restores the PCM audio data before compression coding by decoding the audio stream, and sends it out to a digital-to-analog converter 110.

The digital-to-analog converter 110 converts the PCM audio data into an analog signal, and generates an Lch audio signal and Rch audio signal, and outputs them as sound through a speaker (not shown) of the connected audio reproduction system.

The IRD 100 in this example is designed to feed the video stream and audio stream extracted in the demultiplexer 103 into an IEEE1394 interface unit 112, and send them out to the bus line of IEEE1394 system connected to the interface unit 112. The received video stream and audio stream are sent out in the isochronous transfer mode. Further, when generating video data for GUI in the GUI data generator 108, the video data is supplied into the interface unit 112 through the CPU 111, so that the video data for GUI may be sent out from the interface unit 112 to the bus line.

To the CPU 111, work RAM 113 and RAM 114 are connected, and control is processed by using these memories. An operation instruction from an operation panel 115 and a remote control signal from an infrared ray receiver 116 are supplied into the CPU 111, and the actions according to these operations can be executed. The command and response transmitted from the bus line side to the interface 112 can be judged by the CPU 111.

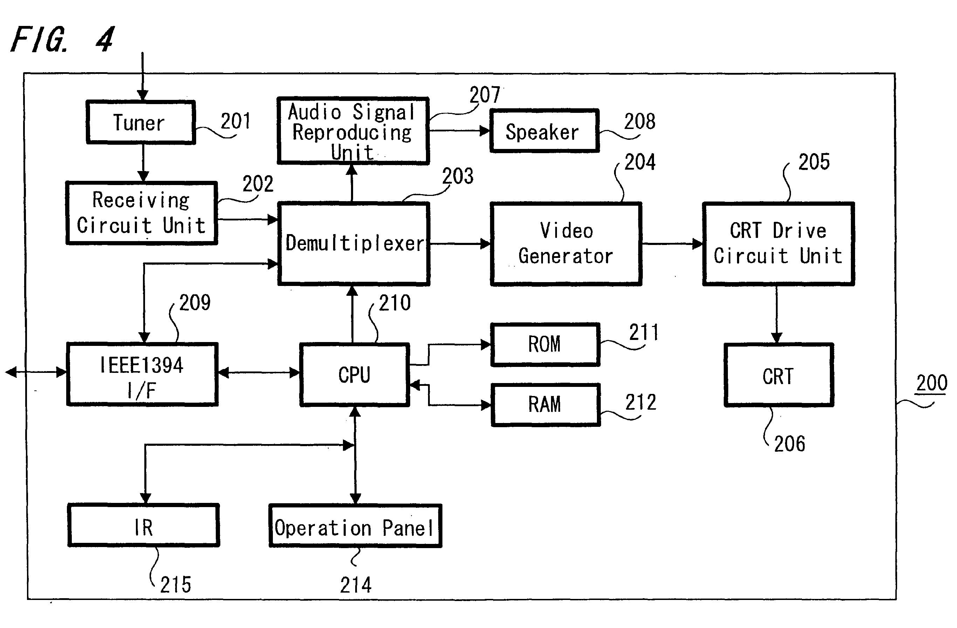

FIG. 4 is a block diagram showing a structural example of the television receiver 200. The television receiver 200 of this example is an apparatus for receiving and displaying the digital broadcast and is known as a digital television receiver.

Digital broadcast data obtained by receiving a specific channel by a tuner 201 having an antenna not shown is supplied into a receiving circuit unit 202, and decoded. The decoded broadcast data is supplied into a demultiplexer 203, and demultiplexed into video data and audio data. The demultiplexed video data is supplied into a video generator 204, and is processed for receiving video, and by the processed signal, a cathode-ray tube (CRT) 206 is driven by a CRT drive circuit unit 205, and video is displayed. The audio data demultiplexed by the demultiplexer 203 is supplied into an audio signal reproducing unit 207, and converted into analog data, amplified and processed, and the processed audio signal is supplied into a speaker 208, and is output as audio.

The television receiver 200 has an interface unit 209 for connecting to the bus line of the IEEE1394 system, and the video data and audio data given to this interface unit 209 from the IEEE1394 system bus line side are supplied into the demultiplexer 203, and the video is displayed by the CRT 206 and the audio is delivered from the speaker 208. The video data and audio data received and obtained in the tuner 201 are supplied from the demultiplexer 203 into the interface unit 209, and sent out to the IEEE1394 bus side.

Display processing in the television receiver 200 and transmission processing through the interface unit 209 are executed by the control of a central processing unit (CPU) 210. To the CPU 210 are connected a memory 211 which is a ROM storing programs necessary for control and a memory 212 which is a work RAM. Operation information from an operation panel 214 and control information from a remote controller received in an infrared ray receiver 215 are supplied into the CPU 210, and the operation and control corresponding to the operation information and control information are executed. Through the IEEE1394 system bus, when the interface unit 209 receives the control data of AV/C command or the like, the data is supplied into the CPU 210, and the CPU 210 executes the corresponding operation and control.

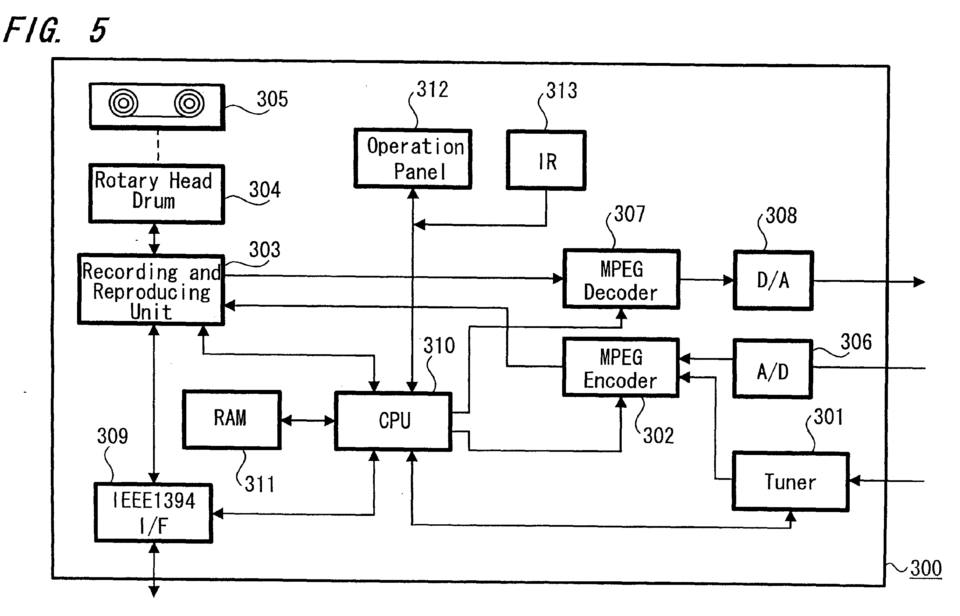

FIG. 5 is a block diagram showing a specific structural example of the video recording and reproducing apparatus.

In the recording system, digital broadcast data obtained by receiving a specific channel by a tuner 301 built in the video recording and reproducing apparatus 300 is supplied into an MPEG (Moving Picture Experts Group) encoder 302, and processed into data of a system suited to recording, for example, video data and audio data of the MPEG2 system. If the received broadcast data is of the MPEG2 system, processing in the encoder 302 is not done.

The data encoded in the MPEG encoder 302 is supplied into a recording and reproducing unit 303, and processed for recording, and the processed recording data is supplied into a recording head in a rotary head drum 304, and recorded in a magnetic tape in a tape cassette 305.

An analog video signal and audio signal input from the outside are converted into digital data in an analog-to-digital converter 306, and supplied into the MPEG encoder 302 to be encoded into video data and audio data of, for example, the MPEG2 system, and supplied into the recording and reproducing unit 303 to be processed for recording, and the processed recording data is supplied into the recording head in the rotary head drum 304, and recorded on the magnetic tape in the tape cassette 305.

In the reproducing system, the signal obtained by reproducing the magnetic tape in the tape cassette 305 by the rotary head drum 304 is supplied into the recording and reproducing unit 303 to be processed for reproducing, and video data and audio data are obtained. The video data and audio data are supplied into an MPEG decoder 307, and decoded, for example, from the MPEG2 system. The decoded data is supplied into a digital-to-analog converter 308, and an obtained analog video signal and audio signal are output to the outside.

The video recording and reproducing apparatus 300 has an interface unit 309 for connecting to the bus line of the IEEE1394 system, and the video data and audio data given to this interface unit 309 from the IEEE1394 system bus line side are supplied into the recording and reproducing unit 303, and recorded on the magnetic tape in the tape cassette 305. The video data and audio data reproduced from the magnetic tape in the tape cassette 305 are supplied from the recording and reproducing unit 303 into the interface unit 309, and sent out to the IEEE1394 system bus line side.

When transmitting through the interface unit 309, if the recording system (for example, the MPEG2 system) in the medium (magnetic tape) in the video recording and reproducing apparatus 300 and the system of the data transmitted on the IEEE1394 system bus line are different, the system may be converted in a circuit in the video recording and reproducing apparatus 300.

Recording process and reproducing process in the video recording and reproducing apparatus 300 and transmission process through the interface unit 309 are executed by the control of a central processing unit (CPU) 310. To the CPU 310 is connected a memory 311 which is a work RAM. Operation information from an operation panel 312 and control information from a remote controller received in an infrared ray receiver 313 are supplied into the CPU 310, and the operation and control corresponding to the operation information and control information are executed. Further, through the IEEE1394 system bus, when the interface unit 309 receives control data of AV/C command or the like, the data is supplied into the CPU 310, and the CPU 310 executes the corresponding operation and control.

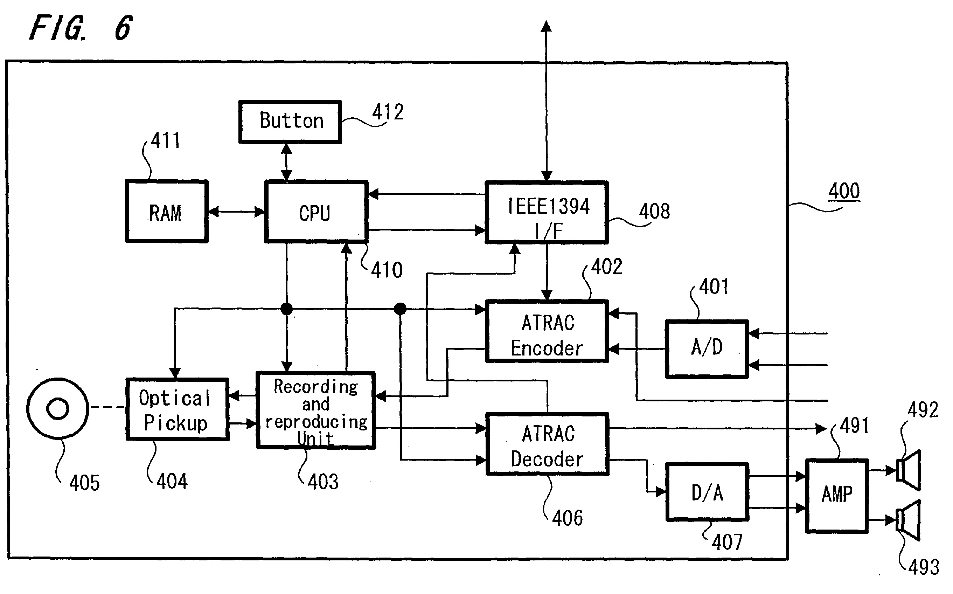

FIG. 6 is a block diagram showing a specific structural example of the audio recording and reproducing apparatus 400. The audio recording and reproducing apparatus 400 in this example is an apparatus for recording and reproducing audio signal or the like as digital data by using a magneto-optical disk or optical disk contained in a resin package called MD (mini disc) as a recording medium.

In the recording system, an analog two-channel audio signal input from the outside is supplied into an analog-to-digital converter 401, and digital audio data is obtained. The converted digital audio data is supplied into an ATRAC (Adaptive Transform Acoustic Coding) encoder 402, and encoded into audio data compressed by the ATRAC system. If digital audio data is directly input from the outside, the input audio data is directly supplied into the ATRAC encoder 402 without passing through the analog-to-digital converter 401. The data encoded in the encoder 402 is supplied into a recording and reproducing unit 403, and processed for recording, and an optical pickup 404 is driven on the basis of the processed data, and the data is recorded in a disk (magneto-optical disk) 405. When recording, meanwhile, it is designed to modulate the magnetic field by a magnetic head not shown.

In the reproducing system, the data recorded in the disk (magneto-optical disk or optical disk) 405 is read out by the optical pickup 404, and reproduced in the recording and reproducing unit 403, and the audio data compressed in the ATRAC system is obtained. The reproduced audio data is supplied into an ATRAC decoder 406, and decoded into digital audio data of a specified system, and the decoded audio data is supplied into a digital-to-analog converter 407, and converted and output as a two-channel analog audio signal. When outputting digital audio data directly to the outside, the audio data decoded in the ATRAC decoder 406 is output directly without passing through the digital-to-analog converter 407. In the example in FIG. 5, the analog converted output audio signal is supplied into an amplifier 491, and amplified and processed, and two-channel audio is output from connected speakers 492, 493.

The audio recording and reproducing apparatus 400 has an interface unit 408 for connecting to the bus line of the IEEE1394 system, and the audio data given to this interface unit 408 from the IEEE1394 system bus line side is supplied into the recording and reproducing unit 402 through the ATRAC encoder 402, and recorded into the disk 405. The audio data reproduced from the disk 405 is supplied from the recording and reproducing unit 402 into the interface unit 408 through the ATRAC decoder 406, and sent out to the IEEE1394 system bus line.

Recording process and reproducing process in the audio recording and reproducing apparatus 400 and transmission process through the interface unit 408 are executed by the control of a central processing unit (CPU) 410. To the CPU 410 is connected a memory 411 which is a work RAM. Operation information from an operation panel 412 is supplied into the CPU 410, and the operation and control corresponding to the operation information are executed. Further, through the IEEE1394 system bus line, when the interface unit 408 receives control data of AV/C command or the like, the data is supplied into the CPU 410, and the CPU 410 executes the corresponding operation and control.

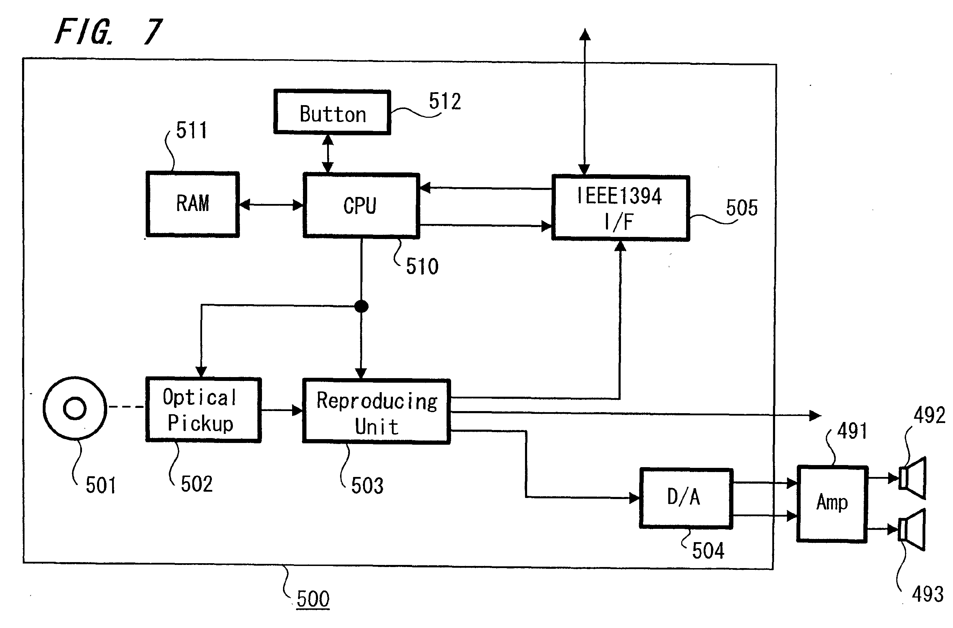

FIG. 7 is a block diagram showing a specific structural example of the audio reproducing apparatus 500. The audio reproducing apparatus 500 in this example is an apparatus for reproducing digital data recorded in an optical disk called CD (compact disc).

Data recorded in an optical disk 501 is read out by an optical pickup 502, and reproduced in a reproducing unit 503, and digital audio data is obtained. This digital audio data is supplied into a digital-to-analog converter 504, and converted and output as a two-channel analog audio signal. When outputting digital audio data directly to the outside, the digital audio data processed in the reproducing unit 503 is directly output to the outside without passing through the digital-to-analog converter 504. In the example in FIG. 6, the analog converted output audio signal is supplied into an amplifier 491, and amplified and processed, and two-channel audio is output from connected speakers 492, 493.

The audio reproducing apparatus 500 has an interface unit 505 for connecting to the bus line of the IEEE1394 system, and the audio data reproduced from the disk 501 is given to this interface unit 505 from the reproducing unit 503, and sent out to the IEEE1394 system bus line.

Reproducing process in the audio reproducing apparatus 500 and transmission process through the interface unit 505 are executed by the control of a central processing unit (CPU) 510. To the CPU 510 is connected a memory 511 which is a work RAM. Operation information from an operation panel 512 is supplied into the CPU 510, and the operation and control corresponding to the operation information are executed. Further, through the IEEE1394 system bus line, when the interface unit 505 receives control data of AV/C command or the like, the data is supplied into the CPU 510, and the CPU 510 executes the corresponding operation and control.

The following explanation relates to processing composition of data transmission by the IEEE1394 system bus line connecting the apparatuses described above.

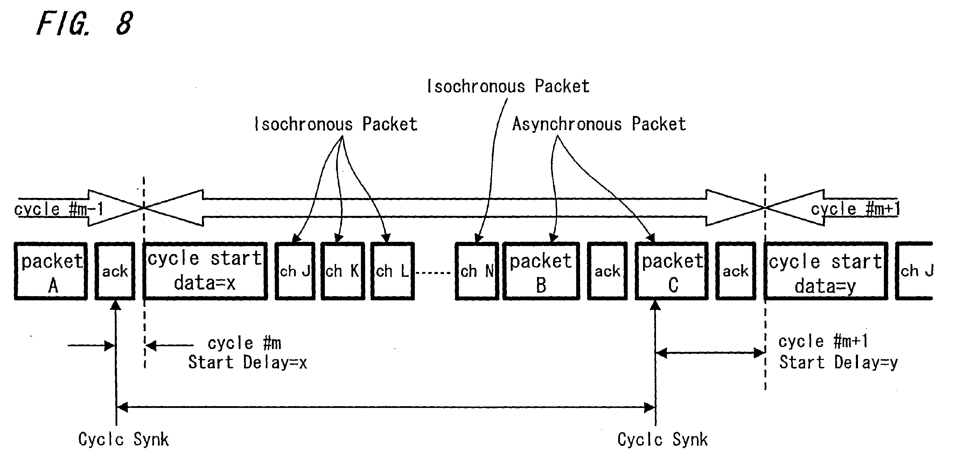

FIG. 8 is a diagram showing a cycle structure of data transmission of the apparatus connected by the IEEE1394. In the IEEE1394, the data is divided into packets, and is transmitted in time division by a reference cycle of 125 µs in duration. This cycle is created by a cycle start signal supplied from a node (any apparatus connected to the bus) having a cycle master function. An isochronous packet holds a band (this is a time unit but is called a band) necessary for transmission from the beginning of all cycles. Accordingly, in isochronous transmission, transmission of data in a specific time is assured. In the event of a transmission error, however, there is no means for protection, and the data is lost. During the time of each cycle not used for isochronous transmission, as a result of arbitration, the node obtaining the bus sends out an asynchronous packet, and in this asynchronous transmission, by acknowledging and retrying, secure transmission is assured, but the transmission timing is not constant.

For isochronous transmission of a specific node, the node must correspond to the isochronous function. At least one of the nodes corresponding to the isochronous function must have a cycle master function. Further, at least one of the nodes connected to the IEEE1394 serial bus must have a function of isochronous resource manager.

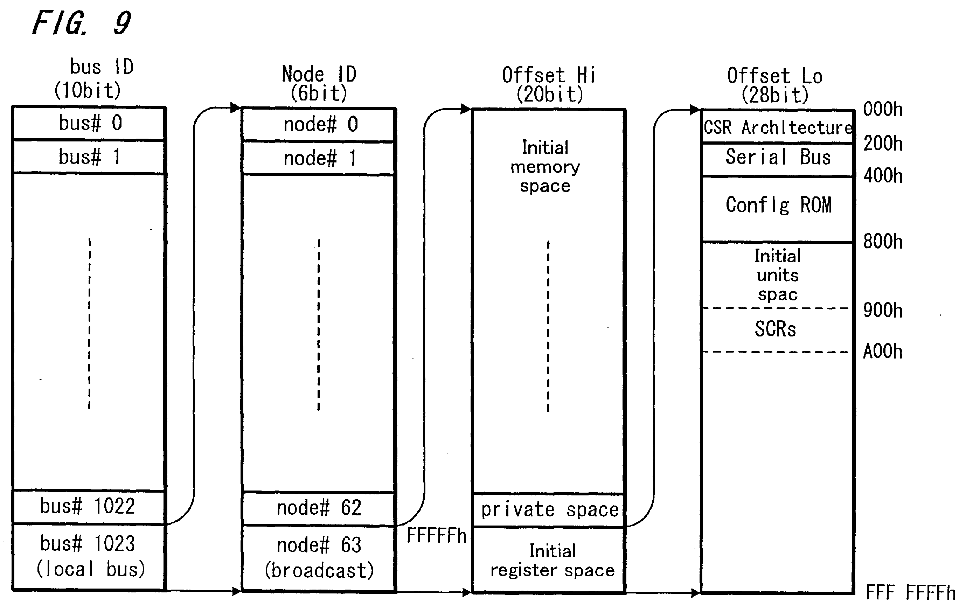

The IEEE1394 conforms to the CSR (Control & Status Register) architecture having a 64-bit address space specified in ISO/ IEC13213. FIG. 9 is a diagram explaining the structure of address space of the CSR architecture. Upper 16 bits represent node IDS showing the nodes on the IEEE1394, and the remaining 48 bits are used for designating the address space given to each node. The upper 16 bits are divided into 10 bits of the bus ID and 6 bits of physical ID (node ID in narrower sense of meaning). The values of all bits being 1 are used for a special purpose, and a total of 1023 buses and 63 nodes can be designated.

Of the address space designated by the lower 48 bits, the space designated by the upper 20 bits is divided into initial register space, private space, and initial memory space used in register specific to CSR of 2048 bytes or register spacific to IEEE1394, and the space designated by the lower 28 bits is used as configuration ROM (configuration read only memory), initial unit space used in application specific to the node, and plug control register (PCRs), etc., when the space designated by the upper 20 bits is initial register space.

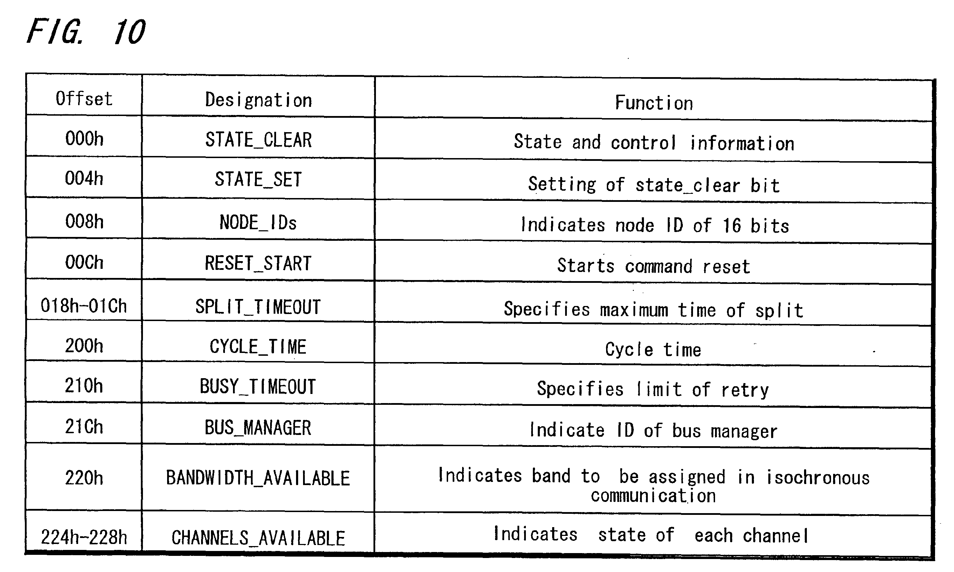

FIG. 10 is a diagram explaining an offset address, name, and function of principal CSR. In FIG. 10, the offset refers to the offset address from the address FFFFF0000000h (a number with "h" at the end represents hexadecimal notation) where the initial register space begins. Bandwidth available register having an offset of 220h shows a band that can be assigned for isochronous communication, and the value of the node working as the isochronous resource manager only is valid. That is, each node has the CSR in FIG. 9, but the bandwidth available register is valid only in the node working as the isochronous resource manager. In other words, the bandwidth available register is substantially possessed by the isochronous resource manager only. In the bandwidth available register, the maximum value is stored when band is not assigned in the isochronous communication, and the value is decreased every time a band is assigned.

Channels available registers of offset 224h to 228h correspond to channel numbers bits which are 0 to 63, and when the bit is 0, it means the channel has been already assigned. Only the channels available register of the node working as the isochronous resource manager is valid,

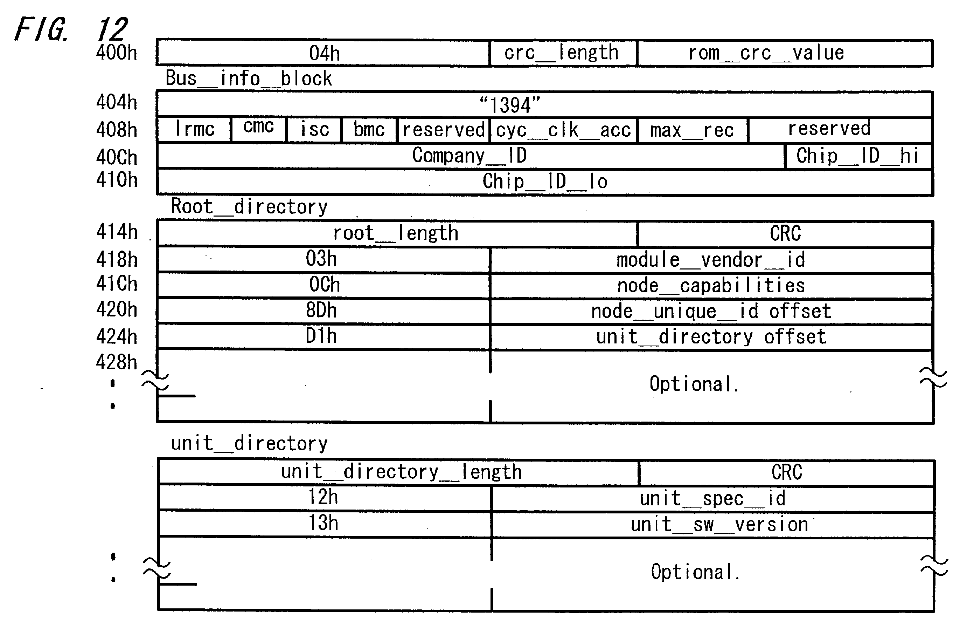

Back to FIG. 9, at addresses 200h to 400h in the initial register space, configuration ROM conforming to general ROM format is disposed. FIG. 11 is a diagram explaining the general ROM format. The node which is an access unit on the IEEE1394 can possess a plurality of units acting independently, while commonly using the address space in the node. Unit directories can show a version and position of a software corresponding to the unit. The position of bus info block and root directory ie fixed, but the position of other blocks is designated by the offset address.

FIG. 12 is a diagram showing the detail of bus into block, root directory and unit directory. In company ID in the bus info block, the ID number showing the manufacturer of the apparatus is stored. In chip ID, the only one ID in the world of the apparatus not duplicating with other apparatus is stored. Moreover, according to the standard of IEC61833, of unit spec ID of the unit directory of the apparatus satisfying the IEC61883, 00h is written in the first octet, Aoh in the second octet, and 2Dh in the third octet, respectively. Further, 01h is written in the first octet of unit switch version, and 1 in LSB (Least Significant Bit) of the third octet.

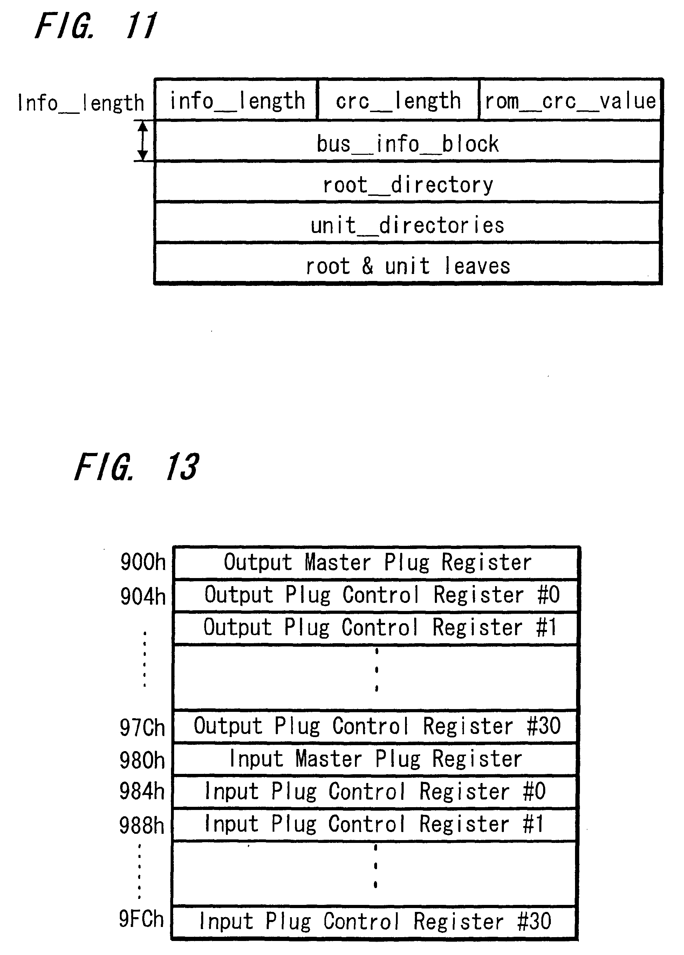

In order to control input and output of the apparatus through the interface, the node has PCR (Plug Control Register) designated in the IEC61883, at addresses 900h to 9FFh in the initial unit space in FIG. 9. This is a materialization of the concept of plug in order to form a signal route similar to an analog interface logically. FIG. 13 is a diagram explaining the composition of the PCR. The PCR is composed of an oPCR (output Plug Control Register) expressing an output plug, and an iPCR (input Plug Control Register) expressing an input plug. The PCR also includes an oMPR (output Master Plug Register) and an iMPR (input Master Plug Register) showing the information of output plug or input plug of the individual apparatus. Each apparatus does not have a plurality of OMPR and iMPR, but the oPCR and iPCR corresponding to the individual plugs may be available in a plurality depending on the capacity of the apparatus. The PCR shown in FIG. 13 possesses 31 pieces of OPCR and iPCR each. Flow of isochronous data is controlled by operating the registers corresponding to these plugs.

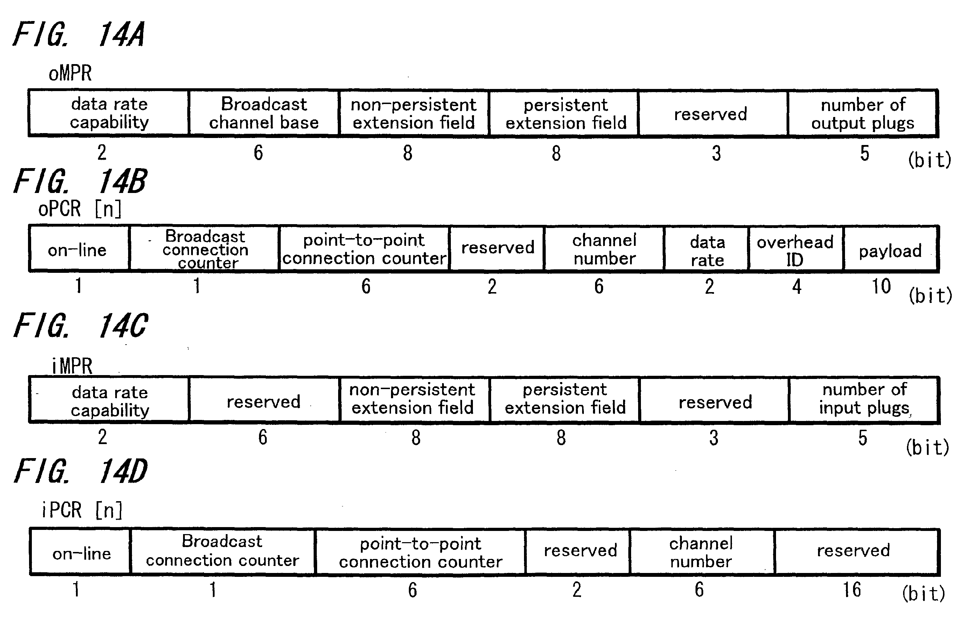

FIG. 14 is a diagram showing the composition of oMPR, oPCR, iMPR and iPCR. FIG. 14A is the composition of oMPR, FIG. 14B is the composition of oPCR, FIG. 14C is the composition of iMPR, and FIG. 14D is the composition of iPCR. In the 2-bit data rate capability at the MSB side of the oMPR and iMPR, the code showing the maximum transmission speed of isochronous data that can be transmitted or received by the apparatus is stored. The broadcast channel base of the oMPR designates the channel number used in the broadcast output.

In the number of output plugs of 5 bits at the LSB side of the oMPR, the number of output plugs possessed by the apparatus, that is, the value showing the number of oPCR is stored. In the number of input plugs of 5 bits at the LSB side of the iMPR, the number of input plugs possessed by the apparatus, that is, the value showing the number of iPCR is stored. The non-persistent extension field and persistent extension field are regions defined for further extension.

The on-line of MSB of OPCR and iPCR shows the state of use of the plug. That is, when the value is 1, the plug is on-line, and when 0, it means off-line. The value of the broadcast connection counter of oPCR and iPCR shows whether the broadcast connection is present (1) or absent (0). The value of the point-to-point connection counter having a width of 6 bits of oPCR and iPCR shows the number of point-to-point connections possessed by the plug.

The value of channel number having a width of 6 bits of oPCR and iPCR shows the isochronous channel number to which the plug is connected. The value of data rate having a width of 2 bits of oPCR shows the actual transmission speed of the packet of the isochronous data issued from the plug. The code stored in the overhead ID having a width of 4 bits of oPCR shows the bandwidth exceeding the isochronous communication. The value of the payload having a width of 10 bits of oPCR shows the maximum value of the data contained in the isochronous packet that can be handled by the plug.

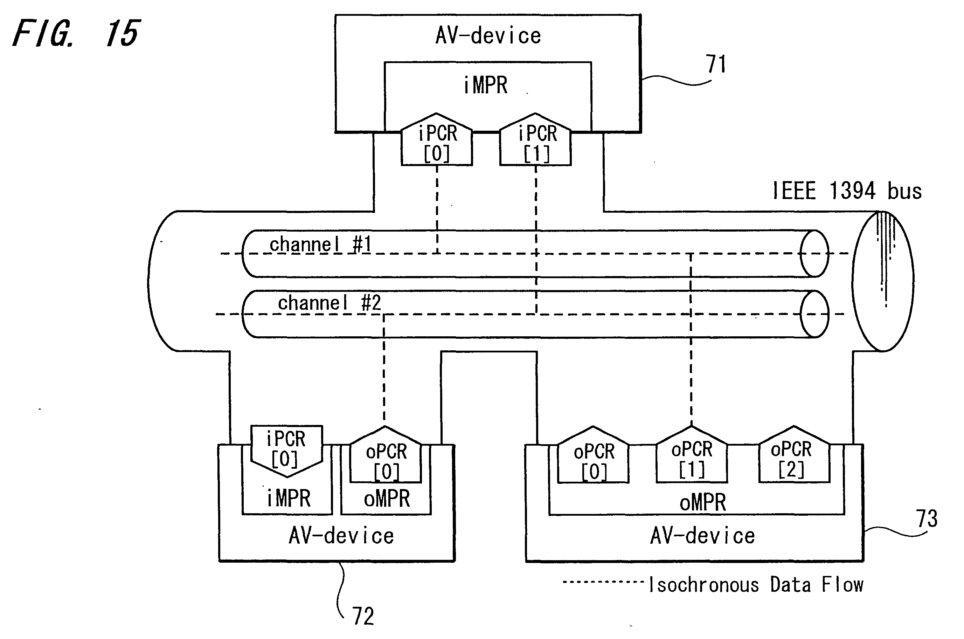

FIG. 15 is a diagram showing the relation of plug, plug control register, and isochronous channels. AV devices 71 to 73 are connected by the IEEE 1394 serial bus. Of the oPCR [0] to oPCR [2] defined in the transmission speed and the number of OPCR by oMPR of the AV device 73, the isochronous data defined in channel by oPCR [1] is sent out to channel #1 of the IEEE1394 serial bus. Of the iPCR [0] and iPCR [1] defined in the transmission speed and number of iPCR by the iMPR of the AV device 71, the input channel #1 is transmission speed and iPCR [0], and the AV device 71 reads in the isochronous data sent out to the channel #1 of the IEEE1394 serial bus. Similarly, the AV device 72 sends out the isochronous data to channel #2 defined by the OPCR [0], and the AV device 71 reads in the isochronous data from the channel #2 defined by the iPRC [1].

Thus, data is transmitted between the apparatuses connected by the IEEE1394 serial bus, and in the system of this embodiment, by making use of the AV/C command set defined as the command for control of the apparatuses connected through this IEEE1394 serial bus, it is designed to judge the control or state of the apparatuses. This AV/C command set is explained below.

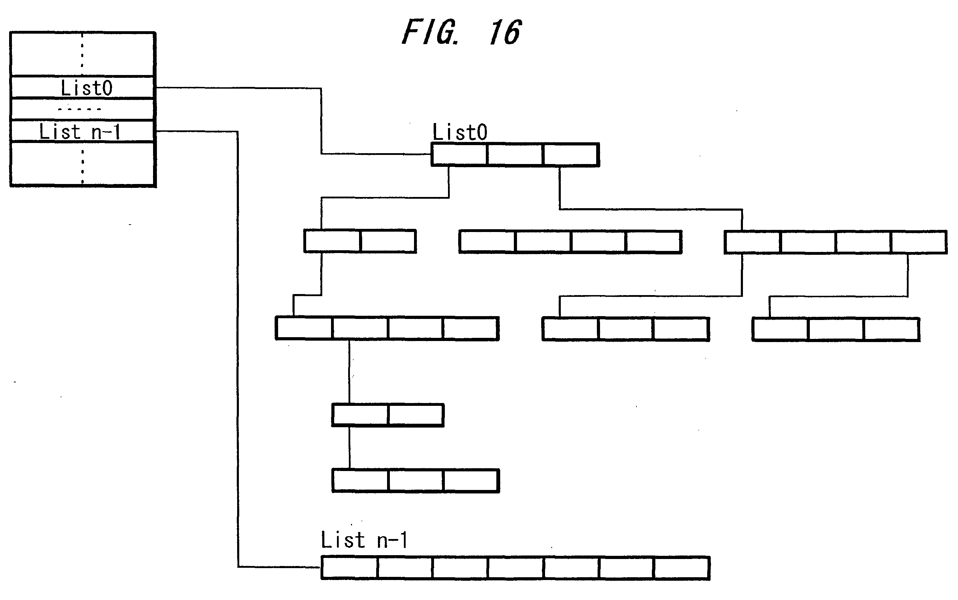

The data composition of subunit identifier descriptor in the AV/C command used in the system of the example is explained while referring to FIG. 16 to FIG. 19. FIG. 16 shows the data composition of subunit identifier descriptor. As shown in FIG. 16, it is formed of a list of hierarchical structure of subunit identifier descriptor. The list shows channels to be received in the case of a tuner, or tunes recorded therein in the case of a disk. The list of the highest layer of the hierarchical structure is called the root list, and, for example, list 0 is the root for the list of its lower position. Other list is similarly a root list. There are as many root lists as the number of objects. Herein, the object is each channel in digital broadcast, for example, when the AV appliance connected to the bus is a tuner. All lists of one layer share common information.

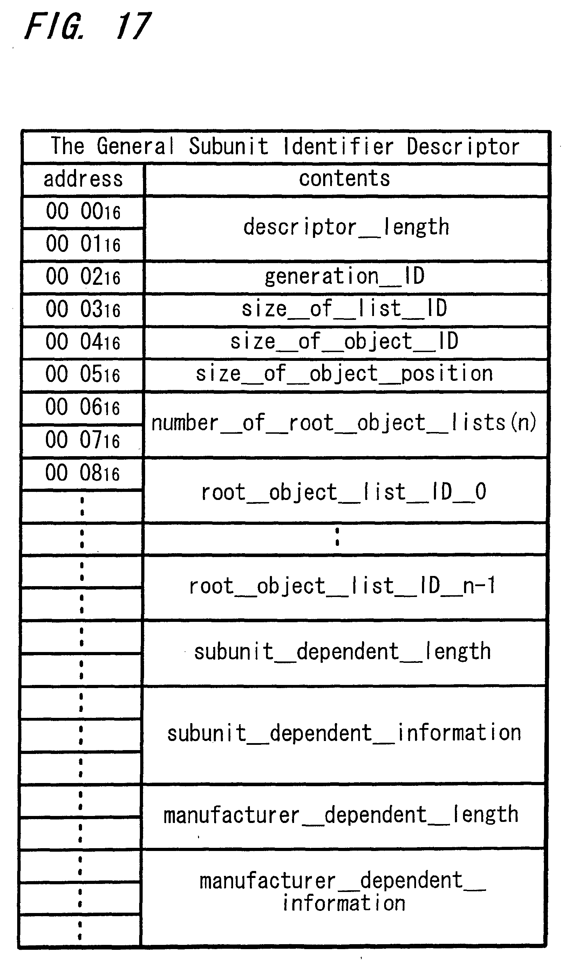

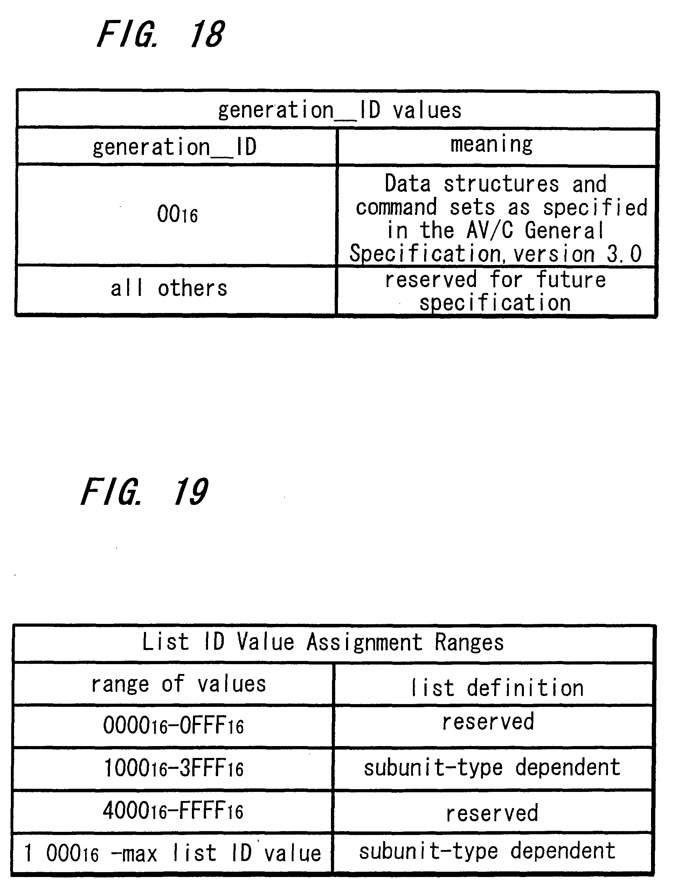

FIG. 17 shows a format of the general subunit identifier descriptor. In the subunit descriptor, attribute information relating to the function is described as the contents. The descriptor length field does not contain the value of its own field. The generation ID denotes the version of the AV/c command set, and this value is, for example, "00h" ("h" represents hexadecimal notation). Herein, "00h" shows the data composition and that the commands are of version 3.0 of the AV/C general specification, for example, as shown in FIG. 18. Also in FIG. 18, all values but "00h" are reserved for future specification.

The size of list ID shows the number of bytes of list ID. The size of object ID shows the number of bytes of object ID. The size of object position shows the position (number of bytes) in the list used for reference in the case of control. The number of root object lists shows the number of root object lists. The root object list ID snows the ID for identifying the root object list of the highest layer being independent from each other.

The subunit dependent length shows the number of bytes of the field of subunit dependent information. The subunit dependent information is the field showing the information specific to the function. The manufacturer dependent length shows the number of bytes of the field of manufacturer dependent information. The manufacturer dependent information is the field showing the specification information of the vender (manufacturer). If manufacturer dependent information does not exist in the disk descriptor, this field is not present.

FIG. 19 shows an assignment range of list ID shown in FIG. 17. As shown in FIG. 19, "0000h to 0FFFh" and "4000h to FFFFh" are reserved as assignment range for future specification. Further, "1000h to 3FFFh" and "10000h to maximum value of list ID" are prepared for identifying dependent information of function type.

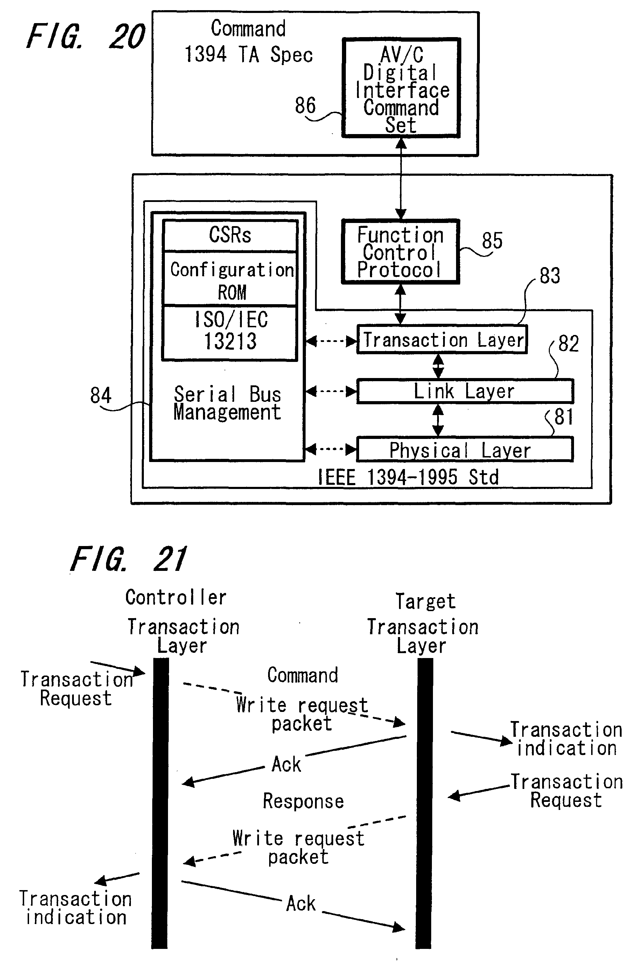

The AV/C command set used in the system of the example is explained by referring to FIG. 20 to FIG. 24. FIG. 20 shows a stack model of the AV/C command set. As shown in FIG. 20, a physical layer 81, link layer 82, transaction layer 83, and serial bus management 84 conform to the IEEE1394. A function control protocol (FCP) 85 conforms to the IEC61883. AV/C command set 86 conforms to the 1394TA specification.

FIG. 21 is a diagram for explaining the command and response of FCP85 of FIG. 20. FCP is a protocol for controlling the apparatus (node) on the bus of the IEEE1394 system. As shown in FIG. 21, the controlling side is the controller, and the controlled side is the target. Transmission or response of commands of FCP is exchanged between the nodes by using the write transaction of asynchronous communication of IEEE1394. The target receiving the data returns an acknowledgment to the controller to confirm reception.

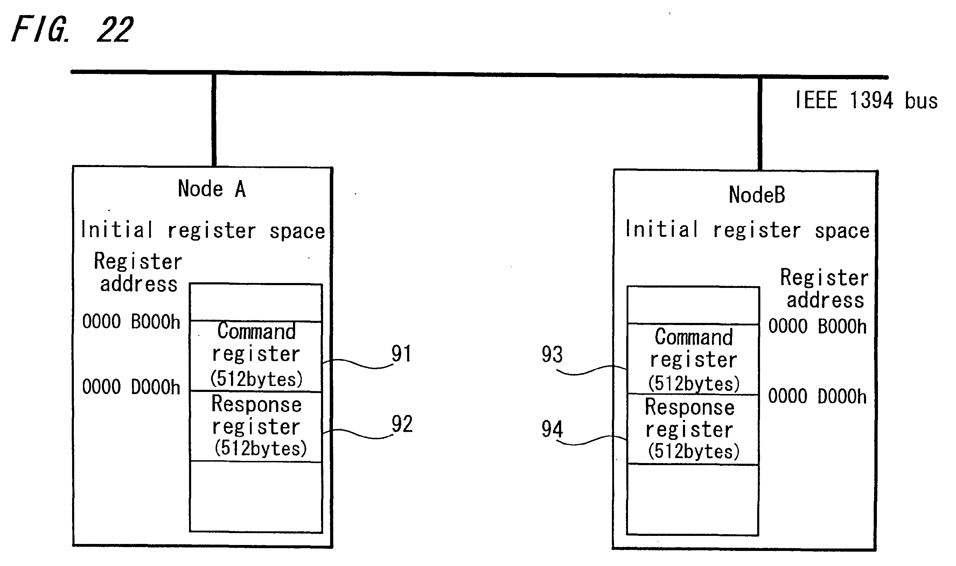

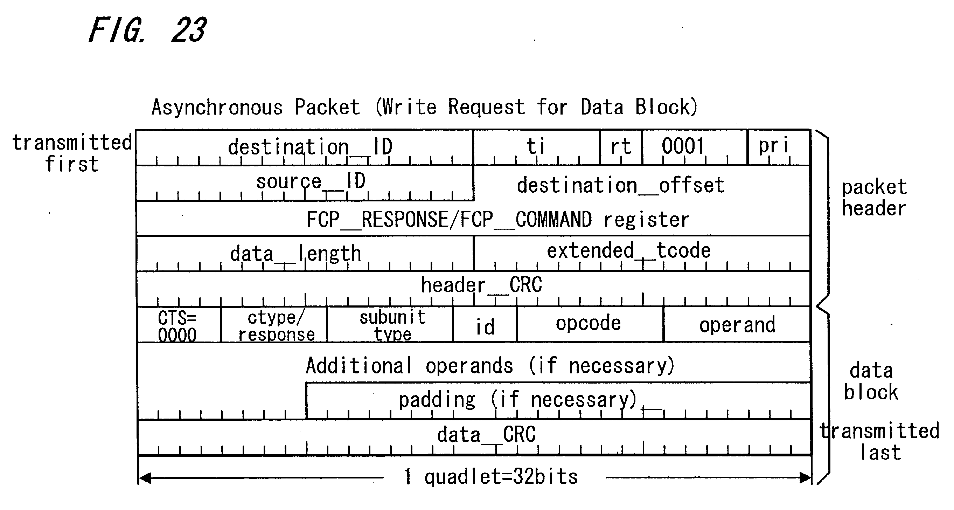

FIG. 22 further explains the relation between command and response of FCP shown in FIG. 21. Node A and node B are connected through the IEEE1394 bus. Node A is the controller and node B is the target. In both node A and node B, a command register and response register are prepared by 512 bytes each. As shown in FIG. 22, the controller gives an instruction by writing a command message in a command register 93 of the target. To the contrary, a response is transmitted as the target writes a response message in a response register 92 of the controller. In these two messages, the control information is exchanged. The type of command set sent by the FCP is described in the CTS in the data field in FIG. 23, which is described later.

FIG. 23 shows a data composition of packet transmitted in asynchronous transfer mode of AV/C command. The AV/C command set is a command set for controlling the AV appliances, and CTS (ID of command set) = "0000". The AV/C command frame and response frame are exchanged between the nodes by using the FCP, In order not to apply load to the bus and AV appliance, the response to the command is given within 100 ms. As shown in FIG. 23, asynchronous packet data is composed of 32 bits (= 1 guadlet) in the horizontal direction. The top of the diagram shows the header, and the bottom is the data block. The destination ID shows the destination of transmission.

The CTS shows the ID of command set, and CTS = 0000 in the AV/C command set. The field of ctype/response shows the function classification of command when the packet is a command, and shows the processing result of the command when the packet is a response. Commands are roughly classified into four types; (1) command for controlling the function from the outside (CONTROL), (2) command for inquiring status from the outside (STATUS), (3) command for inquiring presence or absence of support of control command from the outside (GENERAL INQUIRY: presence or absence of support of opcode, and SPECIFIC INQUIRY: presence or absence of support of opcode and operands), and (4) command for requesting to notify status change to the outside (NOTIFY).

The response is sent back depending on the type of the command. Responses to control (CONTROL) command include "Not implemented" (NOT IMPLEMENTED), "Accepted" (ACCEPTED), "Rejected" (REJECTED), and "Interim" (INTERIM). Responses to status (STATUS) command include "Not implemented" (NOT IMPLEMENTED), "Rejected" (REJECTED), "In transition" (IN TRANSITION), and "Stable" (STABLE). Responses for inquiring presence or absence of support of command from the outside (GENERAL INQUIRY and SPECIFIC INQUIRY) include "Implemented" (IMPLEMENTED) and "Not implemented" (NOT IMPLEMENTED). Responses to command for requesting to notify status change to the outside (NOTIFY) include "Not implemented" (NOT IMPLEMENTED), "Rejected" (REJECTED), "Interim" (INTERIM), and "Changed" (CHANGED).

Subunit type are provided for specifying the function in the apparatus, and tape recorder/player, tuner, and others are assigned. In the subunit type, aside from the functions corresponding to the apparatus, bulletin board subunits (BBS) which are subunits for disclosing information to other apparatuses are also assigned. To identify a subunit if there are a plurality of subunits of the same type, the subunit ID is used as the individual number for addressing. The operation code (opcode) denotes a command, and the operand indicates the command parameter. Additional operands are also prepared. An operand is followed by 0 data or others as required. The data cyclic redundancy check (CRC) is used in error check in data transmission.

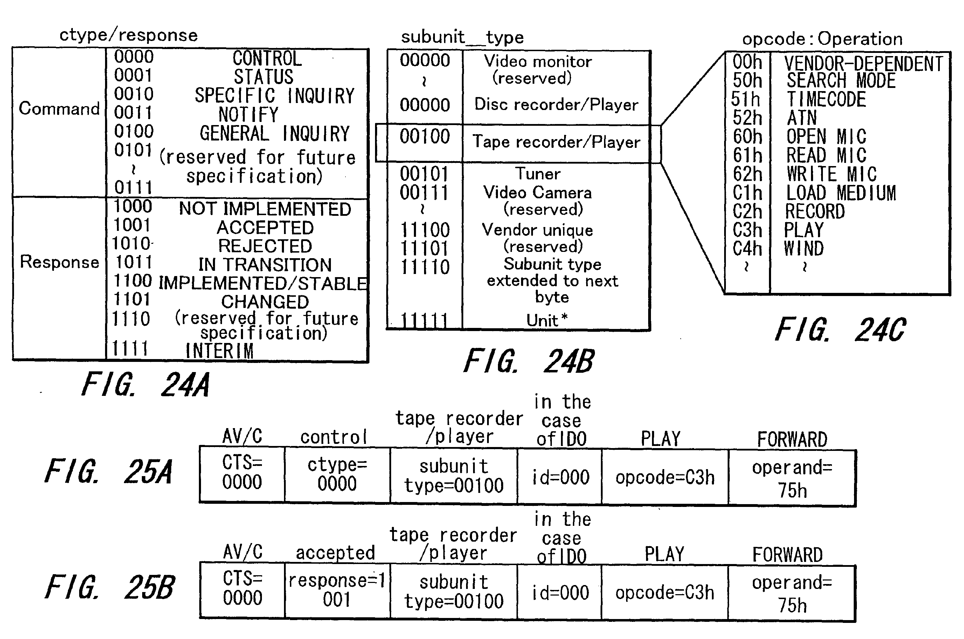

FIG. 24 shows a specific example of AV/C command. FIG. 24A is a specific example of command type/response. The top of the diagram shows the command and the bottom shows the response. CONTROL is assigned in 0000, STATUS in 0001, SPECIFIC INQUIRY in 0010, NOTIFY in 0011, and GENERAL INQUIRY in 0100. Addresses 0101 to 0111 are reserved for future specification. Further, NOT IMPLEMENTED is assigned in 1000, ACCEPTED in 1001, REJECTED in 1010, IN TRANSITION in 1011, IMPLEMENTED/STABLE in 1100, CHANGED in 1101, and INTERIM in 1111. Address 1110 is reserved for future specification.

FIG. 24B shows a specific example of subunit type. The video monitor is assigned in 00000, disk recorder/player in 00011, tape recorder/player in 00100, tuner in 00101, video camera in 00111, sub unit used as bulletin board known as BBS (Bulletin Board Subunit) in 01010, manufacturer's own subunit type (Vender unique) in 11100, and specific subunit type (Subunit type extended to next type) in 11110. A unit is assigned in 11111, but this is used when sending to the apparatus, for example, power on/off.

FIG. 24C shows a specific example of operation code (opcode). There is a table of opcode in every subunit type, and the opcode in the subunit type being tape recorder/player is shown. An operand is defined in each opcode. The manufacturer's own value (Vender dependent) is assigned in 00h, search mode in 50h, time code in 51h, ATN in 52h, open memory in 60h, memory read in 61h, memory write in 62h, load in C1h, record in C2h, play in C3h, and rewinding in C4h.

FIG. 25 shows a specific example of AV/C command and response. For example, when instructing reproduction to a reproducing apparatus as a target (consumer), the controller sends a command as shown in FIG. 25A to the target. This command uses an AV/C command set, and hence CTS = 0000. In c type (command type), the command for controlling the apparatus from outside (CONTROL) is used, and hence c type = 0000 (see FIG. 24). Since the subunit type is tape recorder/player, the subunit type = 00100 (see FIG. 24). The id shows a case of ID0, and hence id = 000. The opcode is C3h denoting play (see FIG .24). The operand is 75h denoting forward (FORWARD) direction. When reproduced, the target returns a response as shown in FIG. 24B to the controller. Herein, Accepted is the response, and hence response = 11001 (see FIG. 24). Except for response, others are the same as in FIG. 25A, and explanation is omitted.

The process explained so far is based on the transmission composition specified as the IEEE1394-1995 standard of the IEEE1394 system. As an extension of this IEEE1394-1995 standard, a standard called IEEE1394a-2000 is specified. In the case of this IEEE1394a-2000 standard, also in asynchronous communication, , a packet for broadcast communication to all nodes in the network is specified.

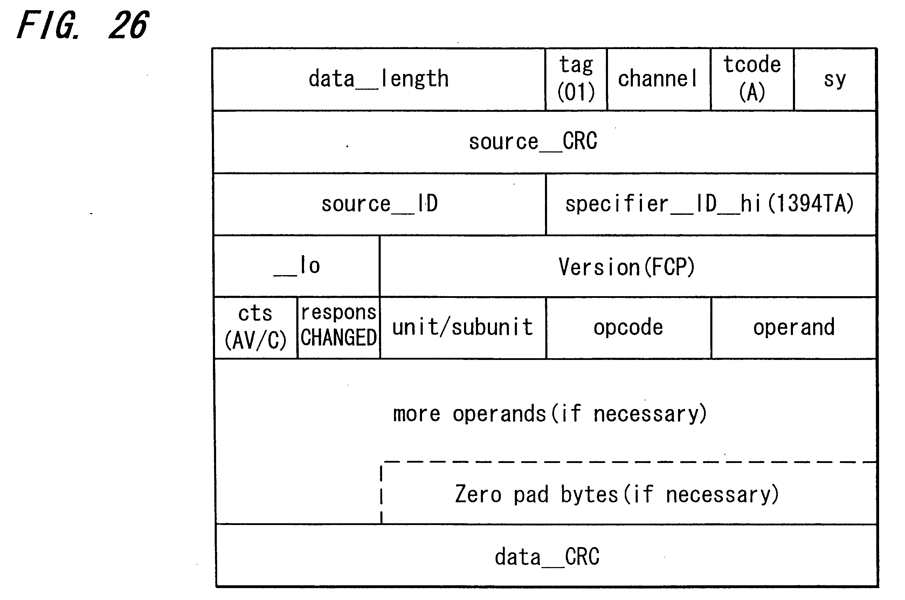

The broadcast communication packet for asynchronous communication is specified in a format called GASP (Global Asynchronous Stream Packet), and it is composed, for example, as shown in FIG. 26. In this packet for broadcast communication, the number of bytes of data in the data field is shown in the field of data length. In the field of the tag, the data showing that the packet is of GASP is disposed. The data in other headers (channel, t code, sy, header CRC) is composed basically the same as other packets for asynchronous communication.

Data fields include source ID field showing the ID of the sender's node (source), 24-bit specifier ID field describing the ID assigned from the IEEE RA (Registration Authority), and version field defined by the owner of this ID. In the example in FIG. 26, using this packet of GASP, command and response of AV/C command are transmitted, and the data is disposed, which is the same as the one in the data block of packet for AV/C command shown in FIG. 23. The example in FIG. 26 is an example of transmission of response showing status change of AV/C command (CHANGED).

Using the GASP packet, by broadcast communication in asynchronous communication, for example, when plural networks are connected through the bus bridge as shown in FIG. 2, broadcast communication is also performed to other connected networks .

Transmission processing in this example executed by using the bus line of the IEEE1394 system bus line is explained below. In this example, the network is composed, for example, as shown in FIG. 2, and the AV/C command is exchanged among the apparatuses for composing the network, and notiry command (NOTIFY) is used in this processing. As already explained, the notify command is to request to notify change of a specified state from the partner apparatus. In the apparatus receiving this notify command, a notify cue is stored in order to notify as instructed by the command. The cue is stored, for example, by using a memory connected to the central processing unit of each apparatus as a storage area, and the issue side node ID of the notify command is stored. When the control means judges that a state change instructed by the notify command has occurred, occurrence of corresponding state change is notified to the apparatus of the node ID stored in the cue. For notifying, the response of state change (CHANGED) is used.

In this example, in the apparatus receiving the notify command, the notify cue is used, and if there is no vacancy in cue storage area, a flag used as a switch for notifying this fact is prepared by using part of storage area of the memory connected to the control means. When the switch is turned on, and a vacancy is made in the cue storage area, the control means controls to make broadcast communication telling each node in the network that there is a vacancy. This broadcast communication is performed, in this example, by using the GASP packet shown in FIG. 26.

As an example of use of notify command, for example, it may be notified when there is a change in the state of use in the channel and band on the bus line. That is, as mentioned above, on the IEEE1394 bus line, data is transmitted by connecting with other apparatus by using a specific channel and band, but it is only the connected apparatus that is capable of canceling the connection and releasing the channel in an idle state. Therefore, if there is other apparatus intending to use the corresponding channel, a notify command may be sent to the connected apparatus, requesting to notify when releasing process of the corresponding channel and band is executed.

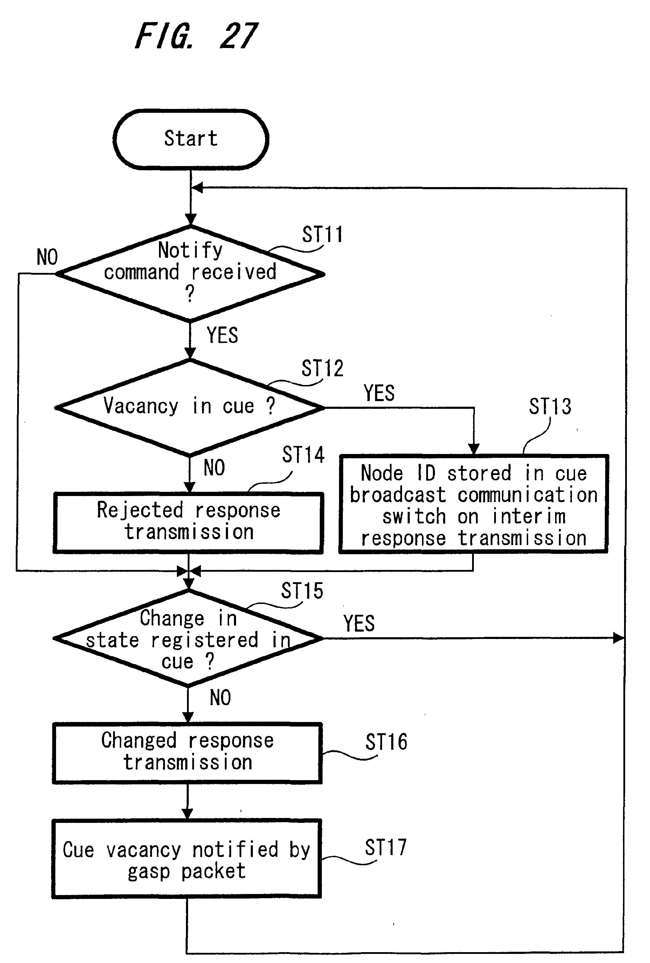

FIG. 27 is a flowchart showing an example of processing when the target apparatus receives a notify command in this example. Explaining according to the flowchart in FIG. 27, first, the control means (central processing unit, etc.) of each apparatus judges if the addressed notify command is received or not through the bus line (step ST11). When it is judged that the notify command is received, it is then judged if there is any vacancy in the cue storage area (step ST12).

Herein, if it is judged there is a vacancy in the cue storage area, the command issue side node ID is stored in the corresponding cue storage area (step ST13). At the same time, the information about the state change to be notified is stored. When storing information in the cue storage area, a flag used as a switch for notifying there is no vacancy in cue storage area is set in ON position. When the cue is stored, the notify command is processed normally, and an interim (INTERIM) response is transmitted to the command issue side.

At step ST12, if it is judged there is no vacancy in the cue storage area, a rejection (REJECTED) response is transmitted to the command issue side, and it is notified that the notify command is not accepted (step ST14).

After processing at steps ST13 and ST14, and if it is judged that notify command is not received at step ST11, the control means of this target apparatus judges if the state change registered (stored) in the cue has occurred or not (step ST15). If it is judged that there is no state change, the process returns to step ST11 for judging reception of notify command.

If it is judged at step ST15 that the state change registered in the cue has occurred, the state change (CHANGED) response is transmitted to the apparatus of the node ID registered in the cue (step ST16). At this time, the information about the node ID and state change stored in the cue is erased.

After transmitting the state change (CHANGED) response, since the flag used as a switch for notifying there is no vacancy in the cue storage area is set at ON position, it is notified that a vacancy is made in the cue storage area by asynchronous communication using the GASP packet to all nodes in the network (herein the network includes other network connected by bus bridge) by broadcast communication so as to be received in all nodes in operating state (that is, in a power supplied state) (step ST17). After transmitting the GASP packet, the flag used as a switch for notifying there is no vacancy in the cue storage area is returned to OFF position. After this operation, the process returns to step ST11 for judging reception of notify command.

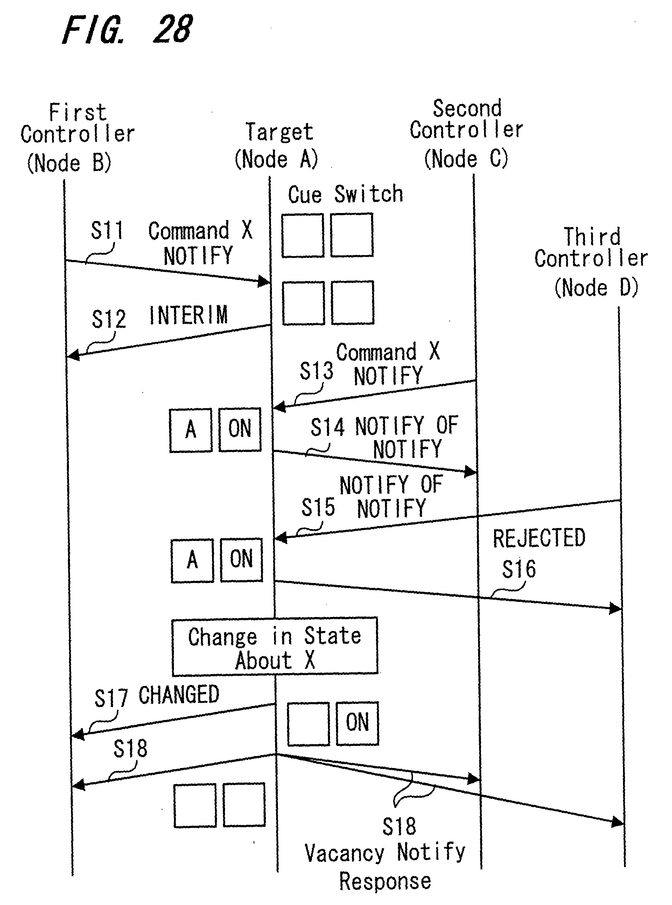

FIG. 28 relates to a processing example of transmission of notify command by using the network of the example, showing the cue storage state in the target apparatus and the transmission state of response by the lapse of time.

In this example, the node A apparatus (IRD 100) of the network configuration shown in FIG. 2 is the target, node B apparatus (television receiver 200) is a first controller, node C apparatus (video recording and reproducing apparatus 300) is a second controller, and node D apparatus (audio recording and reproducing apparatus 400) is a third controller. Each controller transmits a notify command to the target. In this example, one cue storage area is prepared in the target (node A).

Explaining the transmission state according to FIG. 28, in the initial state, no data is stored in the cue storage area of the target apparatus, and the flag composing the switch showing cue vacancy is turned off.

In this state, suppose the first controller (node B) transmits notify command to notify the change about state X to the target (node A) (step S11). Receiving this command, the target (node A) stores the node ID of node B and state change X to be notified in the cue storage area, and transmits an interim (INTERIM) response for accepting the notify command to the first controller (node B) (step S12). By setting in this cue storage area, there is no vacancy in the cue storage area, and the switch showing cue vacancy is turned on.

Consequently, suppose the second controller (node C) transmits a notify command to notify the change about state Y to the target (node A) (step S13). Receiving this command, the target (node A) sends a rejected (REJECTED) response to the second controller (node C) because there is no vacancy in the cue storage area, and it is notified that the notify command is not accepted (step S14).

Similarly, suppose the third controller (node D) transmits a notify command to notify the change about state X to the target (node A) (step S15). Receiving this command, the target (node A) sends a rejected (REJECTED) response to the third controller (node D) because there is no vacancy in the cue storage area, and it is notified that the notify command is not accepted (step S16).

Later, when state X stored as cue is changed, the target (node A) transmits state change (CHANGED) response to the first controller (node B) (step S17). At this time, in the target apparatus, the data about the node ID and state change stored in the cue storage area is deleted, and the state of the switch showing cue vacancy is judged. At this time, since the switch is set at ON position, it is notified that a vacancy is made in the cue by asynchronous communication using the GASP packet to all nodes in the network by broadcast communication, so as to be received in all nodes (step S18). At this time, by transmitting state change (CHANGED) response, for example, vacancy in the cue storage area is notified. Then the switch showing cue vacancy is set back to OFF position.

In this way, when the cue storage area in the target apparatus becomes vacant, the fact is notified to all nodes in the network by broadcast communication, and if any one of the apparatuses in the network desires to be executed notify process by sending notify command to the target apparatus, by transmitting the notify command immediately after receiving the packet of the broadcast communication, possibility of acceptance or this notify command occurs, and the control process by using the notify command can be executed efficiently. That is, in the prior art, when the second controller transmits a notify command at step S13 in FIG. 27, for example, and receives the response rejecting the command at step S14, the second controller must execute the transmission process of the notify command repeatedly until the notify command is accepted. In this example, by contrast, once the notify command is transmitted and rejected, waiting until the occurrence of vacancy in cue storage area is notified by broadcast communication, it is enough by sending the notify command again when notified, and wasteful data transmission can be eliminated, and redundant data transmission on the network is eliminated.

In this example, in the target apparatus, only one area is prepared as the cue storage area, but since the node ID to be notified and the data relating to the state change requested by the node ID are stored in the storage area, if there are plural types of state change to be requested, the cue storage area can be shared, and it is not necessary to prepare a cue storage area for each one of state change, and the control configuration of the target apparatus can be simplified.

In the example in FIG. 28, when there is no vacancy in cue storage area, the switch for notifying vacancy in the cue storage area is turned on, but when there is no vacancy in the cue storage area, the switch for notifying vacancy in the cue storage area may be turned on the moment the notify command is transmitted from any one of the nodes. For example, in FIG. 28, the switch may be turned on when the target apparatus receives a notify command from the second controller at step S13.

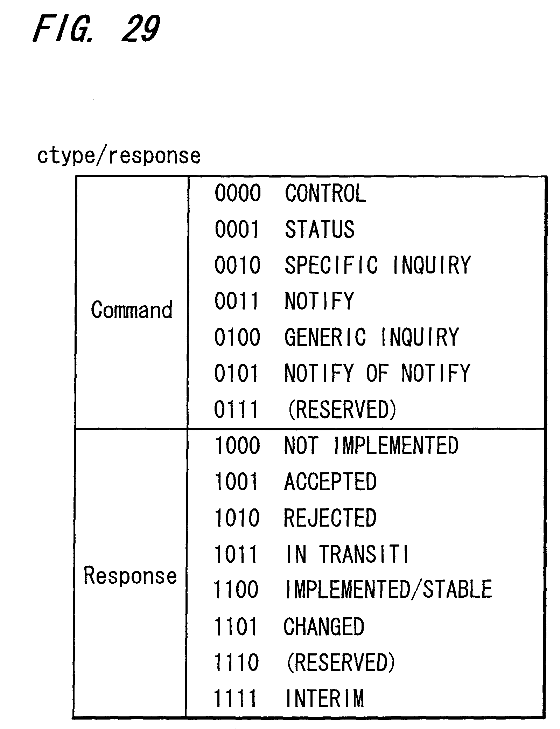

Alternatively, the switch for notifying vacancy in cue storage area may be turned on by transmission of some request from the node as the controller to the target apparatus. For example, as shown in FIG. 29, as the command for AV/C command, a command showing notify of notify (NOTIFY OF NOTIFY) may be specified in a specific value not used (0101 in this example), and when this command is transmitted, it may be designed to notify as set by the notify command, other command and response values shown in FIG. 29 are the same as the command and response shown in FIG. 24.

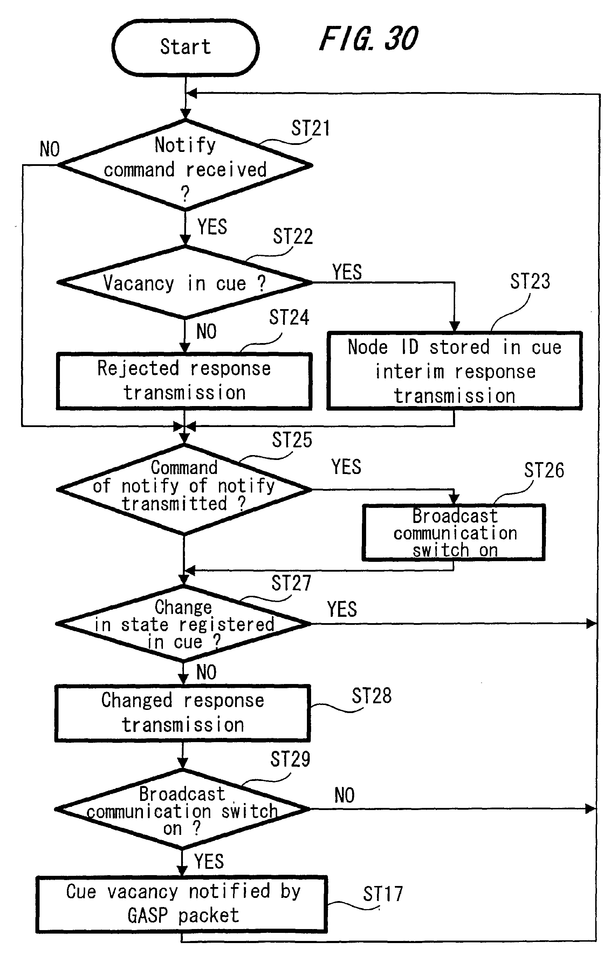

The flowchart in FIG. 30 shows the process relating to notify command reception in the target apparatus when the command showing notify of notify is defined. Explaining the process according to this flowchart, first, the control means of each apparatus (such as central processing unit) judges if the addressed notify command through the bus line is received or not (step ST21). When notify command is judged to be received, it is judged if there is any vacancy in the cue storage area (step ST22).

Herein, if judged there is vacancy in the cue storage area, the command issue side node ID is stored in the storage area of corresponding cue (step ST23). At the same time, the information relating to the state change to be notified is stored. When this cue is stored, it is a state of normal processing of notify command, and an interim (INTERIM) response is transmitted to the command issue side.

At step ST22, if judged there is no vacancy in the cue storage area, a rejected (REJECTED) response is transmitted to the command issue side, and it is notified that notify command is not accepted (step ST24).

After processing at steps ST23 and ST24, and if judged that the notify command is not received at step ST21, the control means of this target apparatus judges if the command of notify of notify (see FIG. 29) is received or not (step ST25). Herein, if judged that the command of notify of notify is received, the flag used as the switch for notifying there is no vacancy in the cue storage area is turned on (step ST26).

After processing at steps ST25 and ST26, it is judged if the state change as registered (stored) in the cue has occurred or not (step ST27). If judged that there is no state change, the process returns to step ST11 for judging reception of notify command.

If it is judged at step ST27 that the state change registered in the cue has occurred, a state change (CHANGED) response is sent to the apparatus of the node ID registered in the cue (step ST28). At this time, the information about the node ID and state change stored in the cue is deleted.

After transmission of state change (CHANGED) response, the flag used as the switch for notifying there is no vacancy in the cue storage area is judged to be on or off (step ST29). If it is judged that the switch is turned on, the process returns to step ST11 to judge reception of notify command. When the switch is judged to be turned on at step ST29, it is notified that the cue storage area has a vacancy by asynchronous communication using the GASP packet to all nodes in the network (herein, the network includes other networks connected by bus bridge) by broadcast communication, to be received in all nodes in an operating state (that is, a power supplied state) (step ST30). After transmitting the GASP packet, the flag used as a switch for notifying there is no vacancy in the cue storage area is set back to OFF position. After this operation, the process returns to step ST11 for judging reception of notify command.

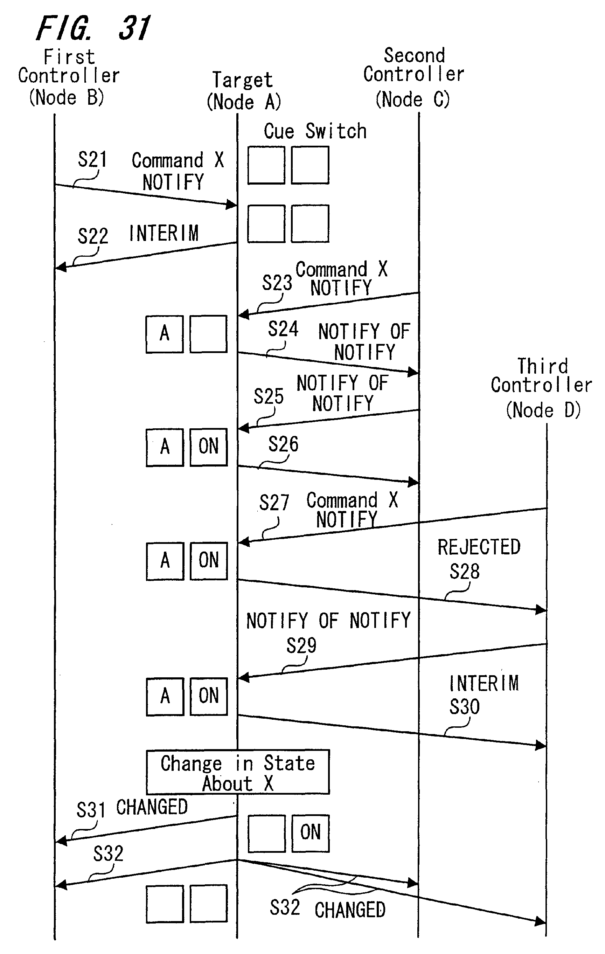

FIG. 31 relates to a processing example of transmission of notify command in the network when the target apparatus executes the process shown in FIG. 30, by preparing a command of notify of notify shown in FIG. 29, showing a cue storage state in the target apparatus and a transmission state of response or the like by the lapse of time.

In this example in FIG. 31, as the case of FIG. 28, the node A apparatus (IRD 100) of the network configuration shown in FIG. 2 is the target, node B apparatus (television receiver 200) is a first controller, node C apparatus (video recording and reproducing apparatus 300) is a second controller, and node D apparatus (audio recording and reproducing apparatus 400) is a third controller. Each controller transmits a notify command to the target. In this example, one cue storage area is prepared in the target (node A).

Explaining the transmission state according to FIG. 31, in the initial state, no data is stored in the cue storage area of the target apparatus, and the flag composing the switch showing cue vacancy is turned off.

In this state, suppose the first controller (node B) transmits a notify command to notify a change about state x to the target (node A) (step S21). Receiving this command, the target (node A) stores the node ID of node B and state change x to be notified in the cue storage area, and transmits an interim (INTERIM) response for accepting the notify command to the first controller (node B) (step S22).

Consequently, suppose the second controller (node C) transmits a notify command to notify the change about state X to the target (node A) (step S23). Receiving this command, the target (node A) sends a rejected (REJECTED) response to the second controller (node C) because there is no vacancy in the cue storage area, and it is notified that the notify command is not accepted (step S24). In the second controller (node C) where the notify command is rejected, a command of notify of notify to inform occurrence of vacancy in the cue storage area is transmitted to the target (node A) (step S25).

When the target receives this command of notify of notify, it turns on the flag composing the switch showing vacancy in the cue storage area, and transmits an interim (INTERIM) response showing the acceptance of command of notify of notify to the second controller (step s26).

Suppose the third controller (node D) transmits a notify command to notify the change about state Y to the target (node A) (step S27). Receiving this command, the target (node A) sends a rejected (REJECTED) response to the third controller (node D) because there is no vacancy in the cue storage area, and it is notified that the notify command is not accepted (step S28). In the third controller (node D) where the notify command is rejected, a command of notify of notify to inform occurrence of vacancy in the cue storage area is transmitted to the target (node A) (step S29).

When the target receives this command of notify of notify, it turns on the flag composing the switch showing vacancy of cue storage area. In this case, however, since it is already turned on by the instruction from other controller, only the ON state is maintained. Then the target transmits an interim (INTERIM) response showing the acceptance of the command of notify of notify to the third controller (step S30).

Later, when state X stored as cue is changed, the target (node A) transmits state change (CHANGED) response to the first controller (node B) (step S31). At this time, in the target apparatus, the data about the node ID and state change stored in the cue storage area is deleted, and the state of the switch showing cue vacancy is judged. At this time, since the switch is set at ON position, it is notified that a vacancy is made in the cue by asynchronous communication using the GASP packet to all nodes in the network by broadcast communication, so as to be received in all nodes (step S32). At this time, by transmitting state change (CHANGED) response, for example, vacancy in the cue storage area is notified. Then the switch showing cue vacancy is set back to OFF position.

Thus, on the basis of the request from the controller, when a vacancy is made in tha cue storage are in the target apparatus, it is notified to all nodes in the network by broadcast communication, and therefore if there is any apparatus desired to send notify command to in the network, it is notified to the apparatus desired to send the command. In this case, by using packet for broadcast communication, as shown in the example in FIG. 31, if there are a plurality of apparatuses desired to send the notify command to, it is notified at once to all apparatuses, and the data transfer quantity for notifying is saved, so that efficient notifying is realized.

In this embodiment, as the target apparatus for receiving notify command, the IRD 100 is used, but other apparatus in the network may be used as the target apparatus, and similar control may be performed. In the embodiment, the status of use of channel or band set by the control of the target apparatus is notified by the notify command, but as far as the process to be executed by the command of the target apparatus is concerned, changes of other processing state may be notified.

In the above embodiment, the network composed of the IEEE1394 system bus is explained, however, the invention is also applied in the case of similar data transmission between apparatuses in other network configurations. In this case, aside from the network composed by direct connection of wired signal lines, it is also applicable to the network in a configuration for data transmission between apparatuses by wireless transmission.

Next, another embodiment is explained below. In this example, the network is composed, for example, as shown in FIG. 2, and the AV/C command is exchanged among the apparatuses for composing the network, and notify command (NOTIFY) is used in this processing. As already explained, the notify command is to request to notify change of a specified state from the partner apparatus. In the apparatus receiving this notify command, a notify cue is stored in order to notify as instructed by the command. The cue is stored, for example, by using a memory connected to the central processing unit of each apparatus as a storage area, and the issue side node ID of the notify command is stored. When the control means judges that a state change instructed by the notify command has occurred, occurrence of corresponding state change is notified to the apparatus of the node ID stored in the cue. For notifying, the response of state change (CHANGED) is used.

In the case of this example, if the cue for notify command has been already stored in the apparatus receiving the notify command and there is no vacant area for storing a cue, the corresponding data is stored in a reserve list, and when the cue storage area has a vacancy, the data stored in the reserve list is transferred into the cue storage area. The reserve list is composed by using a part of the memory area connected, for example, to the control means of the apparatus.

As an example of use of notify command, for example, it may be notified when there is a change in the state of use in the channel and band on the bus line. That is, as mentioned above, on the IEEE1394 bus line, data is transmitted by connecting with other apparatus by using a specific channel and band, but it is only the connected apparatus that is capable of canceling the connection and releasing the channel in an idle state. Therefore, if there is other apparatus intending to use the corresponding channel, a notify command may be sent to the connected apparatus, requesting to notify when releasing process of the corresponding channel and band is executed.

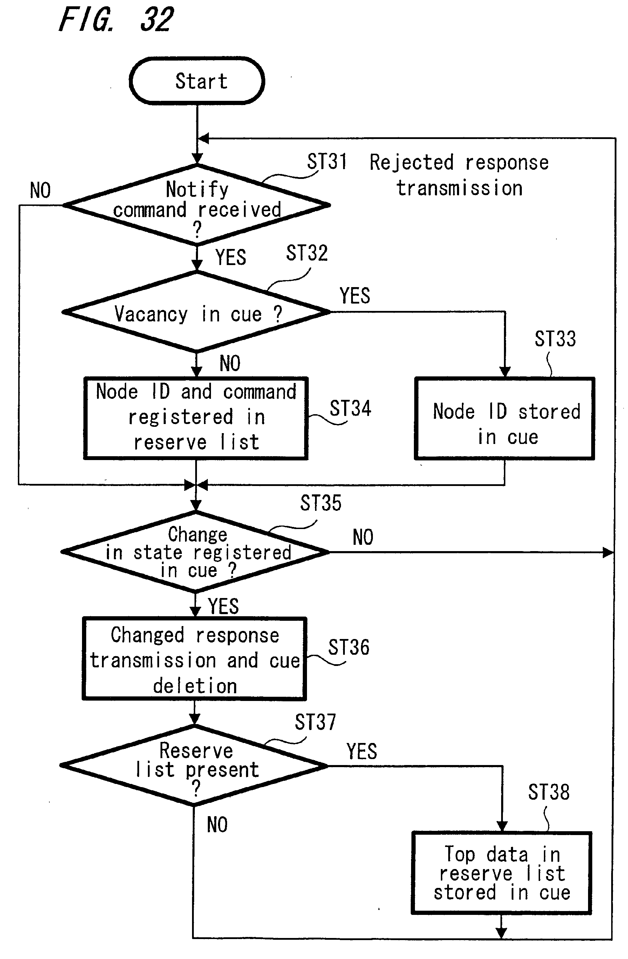

FIG. 32 is a flowchart showing an example of processing when the target apparatus receives a notify command in this example. Explaining according to the flowchart in FIG. 32, first, the control means (central processing unit, etc.) of each apparatus judges if the addressed notify command is received or not through the bus line (step ST31). When it is judged that the notify command is received, it is then judged if there is any vacancy in the cue storage area (step ST32).

Herein, if it is judged there is a vacancy in the cue storage area, the command issue side node ID is stored in the corresponding cue storage area (step ST33). At the same time, the information about the state change to be notified is stored. when the cue is stored, the notify command is processed normally, and an interim (INTERIM) response is transmitted to the command issue side.

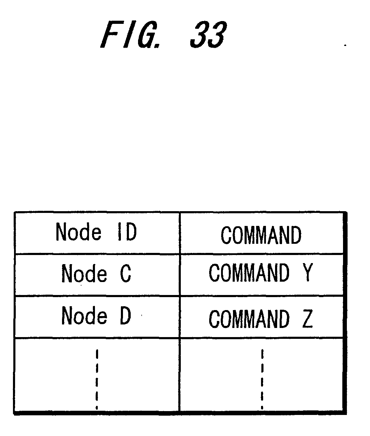

At step ST32, if it is judged there is no vacancy in the cue storage area, the node ID of the command issue side received at this time and the information relating to the state change to be notified are stored in the reserve list composed by using a memory connected to the control means or the like (step ST34). FIG. 33 shows an example of data composition of the reserve list, and in this example, the node ID and the state change demanded by the node are stored as the command type. In this case, the data newly registered in the reserve list is registered as the data of the lowest rank. In the example in FIG. 33, reservation for node C to notify about state change Y, and reservation for node D to notify about state change Z are ranked, listed and registered. When registered in the reserve list, the process about the received notify command is executed, and an interim (INTERIM) response is sent to the command issue side. However, the data composition must be designed to distinguish between the interim (INTERIM) response when stored as cue at step ST33 and the interim (INTERIM) response in the case of storing in the reserve list at step ST34. For example, in the case of processing at step ST34, a code indicating listing in the reserve list is added to the specified operand in the packet transmitted as interim (INTERIM) response.

Back to the explanation of flowchart in FIG. 32, if it is judged that notify command is not received at step ST31, after storing in the cue at step ST33 or storing in the reserve list at step ST34, the control means of this target apparatus judges if the state change registered (stored) in the cue has occurred or not (step ST35). If judging there is no state change, the process returns to step ST31 for judging reception of notify command.

If it is judged at step ST35 that the state change registered in the cue has occurred, the state change (CHANGED) response is transmitted to the apparatus of the node ID registered in the cue (step ST36). At this time, the information about the node ID and state change stored in the cue is erased.

After transmitting this state change (CHANGED) response, judging if there is any process reserved in the reserve list (step ST37), when there is no process reserved in the reserve list, the process returns to step ST31 for judging reception of notify command. If there is a process reserved in the reserve list as judged at step ST37, the data registered in the highest rank in the reserve list is stored in the cue, and the corresponding data is deleted from the reserve list (step ST38). After this step, the process returns to step ST31 for judging reception of notify command.

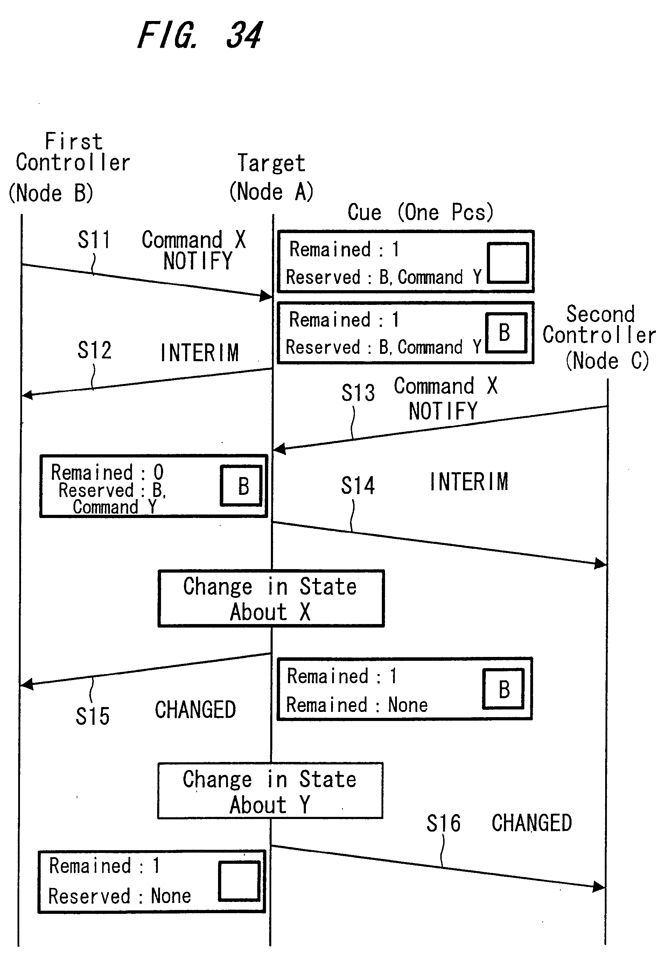

FIG. 34 relates to a processing example of transmission of notify command by using the network of the example, showing the cue storage state and reserve state in the target apparatus and the transmission state of response by the lapse of time.

In this example, the node A apparatus (IRD 100) in the network configuration shown in FIG. 2 is the target, the node B apparatus (television receiver 200) is a first controller, and the node C apparatus (video recording and reproducing apparatus 300) is a second controller. Processing is shown when each controller transmits notify command to the target. In the target of this example (node A), an area for storing one cue is prepared, and plural reserve items can be stored in the reserve list.

Explaining the transmission state by referring to FIG. 34, in the initial state, no data is stored in the cue storage area of the target apparatus, and no data is stored in the reserve list. In this case, instruction by one notify command can be stored and set in the cue, and hence the number of remaining items that can be set is 1.

In this state, suppose the first controller (node B) transmits notify command to notify the change about state x to the target (node A) (step S41). Receiving this command, the target (node A) stores the node ID of node B and state change X to be notified in the cue storage area, and transmits an interim (INTERIM) response for accepting the notify command to the first controller (node B) (step S42). By setting in this cue storage area, the number of remaining items that can be set becomes 0.

Suppose the second controller (node C) transmits a notify command to notify a change about state Y to the target (node A) (step S43). In the target (node A) receiving this command, there is already data stored in the cue storage area, and the number of remaining items that can be set is 0, and the corresponding data (data about node ID and state Y to be notified) is stored in the reserve list. At this time, no other data is stored in the reserve list, and the data is stored in the first rank of the reserve list. When storing in the reserve list, an interim (INTERIM) response accepting notify command is transmitted to the second controller (node C) (step s44). At this time, the data showing listing in the reserve list is added to the interim (INTERIM) response, and the reserved state is judged in the second controller.

Later, when a change occurs in the state X stored as cue, the target (node A) transmits a change (CHANGED) response to the first controller (node B) (step S45). At this time, in the target apparatus, the data about the node ID and state change stored in the cue storage area is deleted, and the data registered in the first rank in the reserve list is transferred to the cue storage area. Therefore, in the cue storage area, the instruction by the command sent by the second controller at step S43 is set. Specifically, the node ID becomes node C, and it is set so as to notify the change of state Y.

After such setting, when a change about state Y occurs, the target (node A) transmits a state change (CHANGED) response to the second controller (node C) (step S46). In this state, if there is no other reservation in the reserve list, nothing is set in the cue storage area, and hence the number of remaining items that can be set is 1.

Thus, in the target apparatus, a reserve list relating to notify command is provided, and when instruction by received notify command cannot be set in the cue storage area, it is registered in the reserve list, and every time the notice set in the cue storage area is executed, by setting the process registered in the reserve list in the cue storage area, if plural notify commands are sent to one target apparatus, each notify command can be processed without rejection. In the prior art, when notify command is sent and rejected (processes at steps S95, S96 in FIG. 1), transmission of command must be repeated until the notify command is accepted, but such process is not needed in the invention, and redundant transmission of data on the network is eliminated.

In the target apparatus, it is not necessary to prepare a plurality of cue storage areas, and processing of transmission control is simple. That is, if plural cue storage areas are prepared, presence or absence of change of plural states stored in the plural cue storage areas must be monitored simultaneously by the control means in the target apparatus, but in this embodiment, it is enough to monitor the change of only one state set in the cue, and the control configuration is simplified.

Also in the target apparatus, by preparing a sufficient capacity for storing as a reserve list, basically, when a notify command is transmitted from the controller to the target apparatus, a response for rejecting the command (REJECTED) is not sent back. Therefore, if a rejection response (REJECTED) is sent back, the controller can judge that the state of the target apparatus is not normal.

Specifically, as the state of the target apparatus, when the power switch of the apparatus is operated in off state, and the apparatus is in sleep state in the power off state (however, the state capable of making a minimum limit of communication through bus line), by sending a notify command to this target apparatus, a rejection response (REJECTED) is sent back.

Therefore, at the controller side apparatus sending the notify command, when a rejection response (REJECTED) is sent back by transmitting the notify command, it can be judged that the target apparatus is in sleep state (power off state). When the controller judges thus, for example, by sending a power on command from the controller to the target apparatus, the corresponding apparatus is waken up from sleep state so as to be ready to accept the notify command.

In this embodiment, as the target apparatus for receiving notify command, the IRD 100 is used, but other apparatus in the network may be used as the target apparatus, and similar control may be performed. In the embodiment, the status of use of channel or band set by the control of the target apparatus is notified by the notify command, but as far as the process to be executed by the command of the target apparatus is concerned, changes of other processing state may be notified.

In the above embodiment, the network composed of the IEEE1394 system bus is explained, however, the invention is also applied in the case of similar data transmission between apparatuses in other network configurations. In this case, aside from the network composed by direct connection of wired signal lines, it is also applicable to the network in a configuration for data transmission between apparatuses by wireless transmission.

According to the communication control method of claim 1, when it is ready to accept a new command in the second communication apparatus of the target side apparatus, it is notified to each communication apparatus in the network by the broadcast communication, and therefore each communication apparatus in the network issues a corresponding command after receiving the broadcast communication, so that the command is accepted efficiently. It is hence not necessary to send the command repeatedly from the command issue side communication apparatus, and necessary processing can be executed securely and promptly without increasing the redundant communication in the network.

According to the communication control method of claim 2, relating to the invention of claim 1, setting to notify state change in the second communication apparatus is made by keeping a specified cue storage area, and the first command issue side identification data and the data relating to the state change are stored in this area, and if the state change indicated by the first command is different, since the area is commonly used, it is not necessary to keep many areas for storing the data to be notified in the second communication apparatus which is the target side apparatus, so that it is possible to notify to the partner communication apparatus in a simple configuration and process.

According to the communication control method of claim 3, relating to the invention of claim 1, broadcast communication telling when it is ready to accept the first command from the second communication apparatus is done, when the setting according to the first command is done in the second communication apparatus, by transmitting the second command from the third communication apparatus in the network, and therefore when there is a communication apparatus newly desired to send a first command, necessary broadcast communication is done, so that notification is carried out efficiently.

According to the communication system of claim 4, when it is ready to accept a new command in the second communication apparatus of the target side apparatus, the fact is notified to each communication apparatus in the network by the broadcast communication, and therefore each communication apparatus in the network issues a corresponding command after receiving the broadcast communication, so that the command is accepted efficiently. It is hence not necessary to send the command repeatedly from the command issue side communication apparatus, and necessary processing can be executed securely and promptly without increasing the redundant communication in the network.

According to the communication system of claim 5, relating to the invention of claim 4, the second communication apparatus comprises storage means for storing a specified cue, setting to notify a specified state change by the second control means is made by storing the first command issue side identification data and the data relating to the state change in the storage means, and if the state change indicated by the first command is different, since the storage means is commonly used, it is not necessary to keep many areas for storing the data to be notified in the second communication apparatus which is the target side apparatus, so that it is possible to notify to the partner communication apparatus in a simple configuration and process.

According to the communication system of claim 6, relating to the invention of claim 4, broadcast communication telling when it is ready to accept the first command from the second communication means is done, when the setting according to the first command is done in the second control means, as the second communication means receives the second command from the third communication apparatus in the network, and therefore when there is a communication apparatus newly desired to send a first command, necessary broadcast communication is done, so that notification is carried out efficiently.

According to the communication apparatus of claim 7, when it is ready to accept a new command, the fact is notified to each communication apparatus in the network by the broadcast communication, and therefore other communication apparatuses in the network issue a corresponding command after receiving the broadcast communication, so that the command is accepted efficiently. It is hence not necessary to send the command repeatedly from the other communication apparatuses to this communication apparatus if it is already set to notify in this communication apparatus, so that in the network connecting this communication apparatus, necessary processing can be executed securely and promptly without increasing the redundant communication in the network.

According to the communication apparatus of claim 8, relating to the invention of claim 7, it further comprises storage means for storing a specified cue, setting to notify a specified state change by the control means is made by storing the command issue side identification data and the data relating to the state change in the storage means, and if the state change indicated by the first command is different, the storage means is used in common. It is hence not necessary to keep many areas for storing data to be notified, so that it is possible to notify to the partner communication apparatus in a simple configuration and process.

According to the communication apparatus of claim 9, relating to the invention of claim 7, broadcast communication is performed telling when it is ready to accept the first command from the communication means, when the setting according to the first command is done in the control means, as the communication means receives the second command. Therefore, if there is a communication apparatus newly desired to send a first command, necessary broadcast communication is performed, so that the notification is carried out efficiently.

According to the communication apparatus of claim 10, by generating and transmitting a first command to notify a specified state change, when this first command is rejected, by generating and transmitting a second command to notify when the first command can be accepted, it is detected when it is ready to accept the first command to notify the specified state change by receiving notice from the partner communication apparatus. Therefore, if the first command is rejected, it is not necessary to send the first command repeatedly until it is ready to accept the first command, so that the control for requesting notification by using the first command is simplified.

According to the communication control method of claim 11, when the notice by the received first command cannot be executed in the target side communication apparatus, the process specified by the first command is reserved, and when it is ready to execute the reserved process, it is set so as to notify according to the first command. It is hence not necessary to send the first command repeatedly from the communication apparatus at the command issue side, and necessary processing can be executed promptly and securely without increasing redundant communication in the network.

According to the communication control method of claim 12, relating to the invention of claim 11, when reserved by receiving the first command in the second communication apparatus, by transmitting the response showing this reservation to the first communication apparatus, the communication apparatus at the command issue side recognizes the reserved state by the transmitted command, and it is securely known that it is not necessary to repeat transmission of the same command.

According to the communication control method of claim 13, relating to the invention of claim 11, the first communication apparatus, after sending the first command, judges that the second apparatus is in sleep atate as power off state when notice of state change is rejected by the response sent back from the second communication apparatus, and therefore the sleep state of the first command receiver is known only by response of rejection. That is, by transmitting the first command, if the command is not accepted immediately, the rejection response is transmitted when the reserve process is executed, and the rejection response is transmitted only in the case of sleep state, so that the state of the partner apparatus can be judged accurately from the rejection response.

According to the communication system of claim 14, when the notice by the first command cannot be executed in the second communication apparatus by sending the first command from the first communication apparatus to the second communication apparatus, the process specified by the first command is reserved, and when it is ready to execute the reserved process, it is set so as to notify according to the first command. It is hence not necessary to send the first command repeatedly from the first communication apparatus to the second communication apparatus, and necessary processing can be executed promptly and securely without increasing redundant communication in the network.

According to the communication system of claim 15, relating to the invention of claim 14, when reserved in the second control means by receiving the command from the first communication apparatus in the second communication means of the second communication apparatus, by transmitting the response showing this reservation by the second communication means, the first communication apparatus at the command issue side recognizes the reserved state by the transmitted command, and it is securely known that it is not necessary to repeat transmission of the same command.

According to the communication system of claim 16, relating to the invention of claim 14, the first control means of the first communication apparatus judges that the second communication apparatus is in sleep state when notice of state change is rejected by the response received after the first communication means has sent the command, and therefore the sleep state of the second communication apparatus is known only by response of rejection. That is, by transmitting the first command from the first communication apparatus, if the command is not accepted immediately, the rejection response is transmitted when the reserve process is executed, and the rejection response from the second communication apparatus is transmitted only in the case of sleep state, so that the state of the second communication apparatus can be judged accurately from the rejection response.

According to the communication apparatus of claim 17, when not being set to execute the notice by the command transmitted from other communication apparatus, the process specified by the command is reserved, and when it is ready to execute the reserved process, it is set so as to notify according to the command. It is hence not necessary to send the command repeatedly to this communication apparatus even if already set to notify in this communication apparatus, and necessary processing can be executed promptly and securely without increasing redundant communication within the network to which the communication apparatus is connected.

According to the communication apparatus of claim 18, relating to the invention of claim 17, when reserved in the control means by receiving the command in the communication means, by transmitting the response showing this reservation by the communication means, it is judged securely whether set by the command or reserved, by the response transmitted from this communication apparatus.

According to the communication apparatus of claim 19, it is possible to distinguish the status capable executing the notice by the command transmitted from the communication apparatus, from the status of reserving the process specified by the command, according to the response, so that the setting status or reserved status by the command transmitted from the communication apparatus can be judged securely.

According to the communication apparatus of claim 20, relating to the invention of claim 19, the control means judges that the command receiver is in sleep state when rejection of notice of state change is detected by the control means by the response received in the communication means, and therefore the sleep state of the partner communication apparatus is judged only by the response of rejection. Since the sleep state is judged immediately, for example, from this communication apparatus to the partner apparatus, it is possible to send a command for turning on the power source promptly.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention

## Claims

1. A communication control method for controlling a communication in a network composed so as to exchange data mutually between a plurality of communication apparatuses, comprising the steps of:
setting to send, by transmitting a first command from a first communication apparatus to a second communication apparatus in the network and instructing the second communication apparatus to send a notice that there is a specified state change to be executed in the second communication apparatus, to the first communication apparatus, a notice of the specified state change when the state change is generated in the second communication apparatus; and
giving, by broadcast communication, a notice that the first command can be newly accepted to each of the communication apparatuses in the network when the notice of the state change based on the setting is sent from the second communication apparatus to the first communication apparatus.

2. The communication control method according to claim 1, wherein the setting step to send a notice of the state change in the second communication apparatus includes the steps of:
gaining an area for storing a specified cue; and
storing the identification data of the first command issue side and data on the state change in the area, and
also when the state change indicated by the first command is different, the area is used in common.

3. The communication control method according to claim 1, wherein the broadcast communication indicating that the first command sent from the second communication apparatus can be accepted is carried out when a second command is transmitted from a third communication apparatus in the network in such a state that the setting based on the first command is performed in the second communication apparatus.

4. A communication system constituted by connecting a plurality of communication apparatuses with a network composed so as to exchange data mutually, wherein
a first communication apparatus connected to the network comprises:
command generating means for generating a first command to give a notice that there is a specified state change to be executed by control of another apparatus in the network;
first communication means for sending the first command generated by the command generating means to the network and for receiving a notice from a command receiver; and
first control means for judging the notice received by the first communication means, and
a second communication apparatus connected to the network comprises:
second communication means for carrying out a communication in another communication apparatus in the network; and
second control means for carrying out control to judge presence or absence of a specified state change based on the first command received by the second communication means and to set to give a notice when the state change is generated, and to detect the specified state change when the setting is performed, and to give a notice that the first command can be newly accepted by broadcast communication from the second communication means to each of the communication apparatuses in the network when a notice of the specified state change is given from the second communication means.

5. The communication system according to claim 4, wherein
the second communication apparatus includes storage means for storing a specified cue, and
the setting for causing the second control means to give the notice that the specified state change is generated is carried out by storing the identification data of the first command issue side and data on the state change in the storage means and the storage means is used in common also when the state change indicated by the first command is different.

6. The communication system according to claim 4, wherein the broadcast communication indicating that the first command can be accepted from the second communication means is carried out when the second communication means receives a second command from a third communication apparatus in the network in such a state that the setting based on the first command is performed by the second control means.

7. A communication apparatus connected to a network formed by a specified transmission line and capable of exchanging data mutually with another communication apparatus in the network, comprising:
communication means for carrying out a communication with the another communication apparatus in the network; and
control means for carrying out control to judge presence or absence of a specified state change based on a first command received by the communication means and to set to give a notice when the state change is generated, and to detect the specified state change when the setting is performed, and to give a notice that the first command can be newly accepted by broadcast communication from the communication means to each of the communication apparatuses in the network when a notice of the specified state change is given from the communication means.

8. The communication apparatus according to claim 7, further comprising storage means for storing a specified cue,
the setting for causing the control means to give the notice that the specified state change is generated being carried out by storing identification data of the command issue side and data on the state change in the storage means, and the storage means being used in common also when the state change indicated by the first command is different.

9. The communication apparatus according to claim 7, wherein the broadcast communication indicating that the first command can be accepted from the communication means is carried out when the communication means receives a second command in such a state that the setting based on the first command is performed by the control means.

10. A communication apparatus connected to a network formed by a specified transmission line and capable of exchanging data mutually with another communication apparatus in the network, comprising:
communication means for carrying out a communication with another communication apparatus in the network; and
control means for generating a first command to give a notice that there is a specified state change to be executed by control of a specified communication apparatus in the network and for transmitting the first command from the communication means, and for generating a second command to give a notice that the first command can be accepted and for transmitting the second command from the communication means when the first command is rejected.

11. A communication control method for controlling a communication in a network composed so as to exchange data mutually between a plurality of communication apparatuses, comprising the steps of:
transmitting a first command from a first communication apparatus to a second communication apparatus in the network and instructing the second communication apparatus to send a notice that there is a first state change to be executed by control of the second communication apparatus to the first communication apparatus;
reserving to give the notice of the first state change by the second communication apparatus when waiting for a notice of a second state change to be sent to another communication apparatus in the second communication apparatus; and
monitoring the reserved first state change after giving a notice based on generation of the second state change and giving a notice that a state change is generated in the first communication apparatus due to generation of the first state change.

12. The communication control method according to claim 11, wherein when the first command is received and the reservation is carried out in the second communication apparatus, a response indicating the fact is transmitted to the first communication apparatus.

13. The communication control method according to claim 11, wherein when the first communication apparatus sends the first command and a response returned from the second communication apparatus then indicates that the notice of the state change is rejected, the first communication apparatus judges that the second communication apparatus is in sleep state.

14. A communication system constituted by connecting a plurality of communication apparatuses with a network capable of exchanging data mutually, wherein
a first communication apparatus connected to the network comprises:
command generating means for generating a command to give a notice that there is a specified state change to be executed by control of another apparatus in the network;
first communication means for sending the command generated by the command generating means to the network and for receiving a notice from a command receiver; and
first control means for judging the notice received by the first communication means, and
a second communication apparatus connected to the network comprises:
second communication means for receiving the command from the first communication apparatus and transmitting a notice to a sender of the command; and
second control means for setting to judge presence or absence of a specified state change based on the command received by the second communication means and to give a notice when the state change is generated, and for setting to reserve a notice instructed by the received command when the setting is carried out and the second communication means further receives the command, and to give a notice that the reserved state change is generated when a notice of the state change is given by the setting.

15. The communication system according to claim 14, wherein when the second communication means of the second communication apparatus receives the command from the first communication apparatus and the second control means carries out the reservation, the second communication means transmits a response indicative of the fact.

16. The communication system according to claim 14, wherein the first control means of the first communication apparatus judges that the second communication apparatus is in sleep state when the notice of the state change is rejected based on a response received after the first communication means sends the command.

17. A communication apparatus connected to a network formed by a specified transmission line and capable of exchanging data mutually with another communication apparatus in the network, comprising:
communication means for receiving a command from another communication apparatus in the network and transmitting a notice to a sender of the command; and
control means for setting to judge presence or absence of a specified state change based on the command received by the communication means and to give a notice when the state change is generated, and for setting to reserve a notice instructed by the received command when the setting is carried out and the communication means receives another command and to give a notice that the reserved state change is generated when the notice of the state change is given by the setting.

18. The communication apparatus according to claim 17, wherein when the communication means receives the command and the control means carries out the reservation, the communication means transmits a response indicative of the fact.

19. A communication apparatus connected to a network formed by a specified transmission line and capable of exchanging data mutually with another communication apparatus in the network, comprising:
command generating means for generating a command to give a notice that there is a specified state change to be executed by control of another communication apparatus in the network;
communication means for transmitting the command generated by the command generating means to the network and for receiving a notice sent from a command receiver of the command; and
control means for distinguishing setting into a state in which the notice can be given and a state in which reservation is carried out until the notice can be given and judging based on a response received by the communication means.

20. The communication apparatus according to claim 19, wherein the control means judges that the command receiver is in sleep state when detecting that the notice of the state change is rejected based on the response received by the communication means.
